# EUROPEAN PATENT SPECIFICATION

(11) **EP 3 217 352 B1**
(45) Date of publication and mention of the grant of the patent: **12.12.2018**
(21) Application number: 15857211.5
(22) Date of filing: 23.10.2015
(51) Int. Cl.: H04N 7/18, G06T 1/00, B60R 1/00

(54) **VEHICLE PERIPHERY IMAGE DISPLAY DEVICE AND VEHICLE PERIPHERY IMAGE DISPLAY METHOD**
FAHRZEUGUMGEBUNGSBILDANZEIGEVORRICHTUNG UND FAHRZEUGUMGEBUNGSBILDANZEIGEVERFAHREN
DISPOSITIF ET PROCÉDÉ D'AFFICHAGE D'IMAGE DE PÉRIPHÉRIE DE VÉHICULE

(30) Priority: 04.11.2014 JP 2014223966
(43) Date of publication of application: 13.09.2017
(73) Proprietor: Denso Corporation, Kariya-shi, Aichi 448-8661 (JP)
(72) Inventor: KUSUMI, Yousuke, Kariya-city Aichi 448-8661 (JP)
(74) Representative: Cabinet Plasseraud
(86) International application number: PCT/JP2015/080010
(87) International publication number: WO 2016/072300

(56) References cited:
- EP-A1- 2 464 113
- WO-A1-2014/006793
- JP-A- 2005 301 517
- JP-A- 2010 273 014
- JP-A- 2011 022 952
- JP-A- 2013 055 410
- JP-A- 2013 246 493
- US-A1- 2010 215 218

## Description

### [Technical Field]

The present invention relates to image display devices and methods using a technique for capturing images around a vehicle by using an in-vehicle camera mounted on the vehicle, and displaying the captured view images in a display window of the image display device.

### [Background art]

There has been known a technique regarding a viewpoint transformation which transforms, to a bird's eye view image, images captured by various in-vehicle cameras composed of a front-side in-vehicle camera, a rear-side in-vehicle camera, a right hand in-vehicle camera and a left hand in-vehicle camera which are mounted on a vehicle, and displays the obtained bird's eye view image.

It is possible for a vehicle driver to easily and speedily view the obtained bird's eye view images, and to correctly and easily recognize the presence of obstacles around the vehicle, a relationship between the vehicle and those obstacles, road markings painted on a road surface, traffic signs installed on the road, and a distance between the vehicle and the obstacle, and the traffic signs, etc. on the basis of the bird's eye view images

There has been proposed another technique for providing bird's eye view images around a vehicle by using a front side in-vehicle camera and a rear side in-vehicle camera without using a right hand in-vehicle camera and a left hand in-vehicle camera. This technique cannot directly capture bird's eye view images on the right hand and the left hand side of the vehicle. However, this technique can produce bird's eye view images of the right hand and the left hand side of the vehicle on the basis of images captured by the front-side in-vehicle camera and the rear side in-vehicle camera by using the following procedures.

The images captured by the front-side in-vehicle camera of the vehicle have obliquely forward views in addition to a forward view of the vehicle. When the vehicle moves forward, the obliquely forward side of the vehicle becomes right and left hand sides of the vehicle. Accordingly, bird's eye view images are stored in advance in a memory device, and the images, which correspond to the right and left hand sides of the vehicle when the vehicle moves forward, are obtained from the memory device and used as the images of the right hand and left hand side of the vehicle. This technique makes it possible to obtain and display the bird's eye view image of the surrounding area of the vehicle when the vehicle moves forward.

This technique can be applied to a situation when the vehicle moves backward. That is, it is also possible to display the bird's eye view images showing a forward view, a backward view, right hand and left hand views of the vehicle when the vehicle moves backward. The bird's eye view images showing forward view, backward view, right hand view and left hand view of the vehicle correspond to previous images which have been captured by the front-side in-vehicle camera, the rear-side in-vehicle camera, the right hand and left hand in-vehicle cameras at a past time. Accordingly, the images to be displayed for the right hand and left hand side of the vehicle, which have are generated by using the past captured bird's eye view images, are referred to as the "history images".

The technique for displaying such history images previously described has the following drawback. When foreign matter such as water drop or mud are adhered on a surface of lens of the in-vehicle camera or a surface of a cover which covers the lens of the in-vehicle camera, images captured by the in-vehicle camera and bird's eye view images have such foreign matter image. When the bird's eye view image is produced and displayed on the basis of multiple history images, the foreign matter image is displayed on the overall multiple history images which form the bird's eye view image, and as a result, the resolution of the bird's eye view image is reduced, and it becomes difficult to correctly display the surrounding area of the vehicle. A patent document 1 has proposed a conventional technique to detect a foreign matter image in captured view images and eliminate the detected foreign matter image from the captured view images as the history images. A patent document 2 discloses an example of a road marking image processing device that acquires an image of a road surface and recognizes a road marking using a camera. Another example of an image generating apparatus can be found in a patent document 3 and a patent document 4.

### [Citation List]

### [Patent Literature]

[Patent document 1] PCT International publication No. 2009/057410.
[Patent document 2] US patent application No. 2010/215218.
[Patent document 3] EP patent application No. 2464113.
[Patent document 4] JP patent application No. 2005301517.

### [Summary of Invention]

### [Technical Problem]

However, the conventional technique previously described requires detecting foreign matter image in the overall captured view images and a large processing load of detecting the foreign matter image in the captured view images and eliminating the detected foreign matter image from the captured view image.

The present invention has been made in consideration of the foregoing circumstances, and it is an object of the present invention to provide an image display device and method using a technique for generating and displaying bird's eye view images around a vehicle using history images. In particular, the image display device and method extract history image from which the foreign matter image has been eliminated while reducing a processing load of detecting the presence of foreign matter image in the history images, and generate and display the bird's eye view images and the history image around the vehicle in the display window.

### [Solution to Problem]

The present invention has been made in consideration of the foregoing circumstances, and it is an object of the present invention to provide an image display device and method for displaying bird's view images of around a vehicle, which have been captured by using in-vehicle cameras, in a display window. The image display device and method receive captured view images around the vehicle sequentially captured by and transmitted from the in-vehicle cameras, execute a sight-line transformation of the captured view images to generate bird's eye view images having a sight-line viewed from above the vehicle. The image display device and method display the captured bird's eye view images at a corresponding location around the vehicle in the display window. The image display device and method acquire movement information representing a movement amount of the vehicle, and extract, as a history image, a partial image from the captured bird's eye view image generated at a timing before the vehicle reached a current location on the basis of the movement information of the vehicle. The history image corresponds to a dead angle area of the in-vehicle camera. The image display device and method display, in the display window, captured bird's eye view images and the history image which corresponds to the dead angle area of the in-vehicle camera. The image display device and method detect whether the extracted history image has a foreign matter image affected by the presence of foreign matter adhered on the in-vehicle camera. When the detection result indicates that the history image has the foreign matter image, the image display device and method extract, as the history image, a partial image without the foreign matter image from another captured bird's eye view image.

### [Advantageous Effects of Invention]

The image display device and method having the structure previously described according to the present invention detect a foreign matter image in the history images, not in the overall bird's eye view images. When detecting the foreign matter image, the image display device and method eliminate the detected foreign matter image from the history images. This makes it possible to reduce the processing load of detecting the foreign matter image in the history images, and output the history images, from which such foreign matter image has been eliminated, with high efficiency.

### [Brief Description of Drawings]

[FIG. 1] is a view explaining a vehicle 1 equipped with an image display device (100) for displaying images around the vehicle 1 according to first and second exemplary embodiments of the present invention.
[FIG. 2] is a view explaining a schematic inner structure of the image display device 100.
[FIG. 3] (a), (b) are views explaining a captured forward image in front of the vehicle 1.
[FIG. 4] (a), (b) are views explaining a theory of image transformation of the captured view image to a bird's eye view image.
[FIG. 5] is a view explaining a theory of displaying a bird's eye view image around the vehicle 1 on the basis of history images.
[FIG. 6] is a view explaining a problem of a technique for displaying a bird's eye view image around the vehicle 1 using history images due to the influence of foreign matter adhered on in-vehicle cameras 10F, 10R.
[FIG. 7] is a view showing a flow chart of the first half of a bird's eye view image display process according to the first exemplary embodiment.
[FIG. 8] is a view showing a flow chart of the second half of the bird's eye view image display process according to the first exemplary embodiment.
[FIG. 9] is a view showing a flow chart of a foreign matter image detection process in the bird's eye view image display process according to the first exemplary embodiment.
[FIG. 10] (a), (b) are views showing a schematic explanation of a foreign matter image detection process in the bird's eye view image display process according to the first exemplary embodiment.
[FIG. 11] is a view showing a flow chart of the foreign matter image elimination process in the bird's eye view image display process according to the first exemplary embodiment.
[FIG. 12] (a), (b) are views showing a schematic explanation of eliminating foreign matter image from history images in the foreign matter image elimination process in the bird's eye view image display process according to the first exemplary embodiment.
[FIG. 13] is a view showing an explanation of eliminating foreign matter image from a captured bird's eye view image in the foreign matter image elimination process in the bird's eye view image display process according to the first exemplary embodiment.
[FIG. 14] is a view showing a schematic explanation of eliminating foreign matter image from history images in the foreign matter image elimination process in the bird's eye view image display process according to a second exemplary embodiment.
[FIG. 15] is a view showing a flow chart of the foreign matter image elimination process in the bird's eye view image display process according to the second exemplary embodiment.
[FIG. 16] is a view showing an explanation of eliminating foreign matter image from the captured bird's eye view image in the foreign matter image elimination process in the bird's eye view image display process according to the second exemplary embodiment.

### [Description of Embodiments]

### (First exemplary embodiment)

Next, a description will be given of the image display device and method of displaying images around a vehicle according to a first exemplary embodiment of the present invention.

### (A. Structure of image display device for displaying images around vehicle)

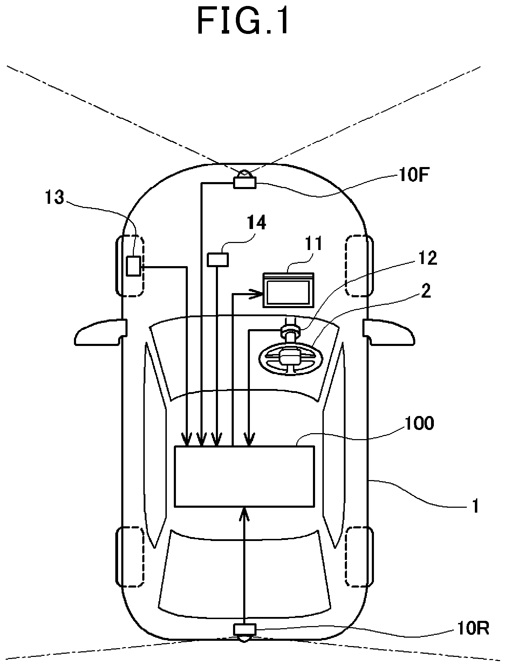

FIG. 1 shows the vehicle 1 on which the image display device for displaying images around the vehicle is mounted. The image display device 100 corresponds to an image display device for displaying images around a vehicle according to the present invention. As shown in FIG. 1, the vehicle 1 is equipped with an in-vehicle camera 10F arranged at a front side of the vehicle 1, an in-vehicle camera 10R arranged at a rear side of the vehicle 1, a display window 11 mounted on the inside of a compartment of the vehicle 1, and the image display device 100. The present exemplary embodiment shows the structure in which the in-vehicle cameras 10F and 10G are mounted at the front side and the rear side of the vehicle 1. However, the concept of the present invention is not limited by this structure. It is possible to apply the concept of the present invention to a structure in which the vehicle 1 is equipped with one of the in-vehicle cameras 10F and 10G are mounted at the front side and the rear side of the vehicle 1. When receiving captured view images around the vehicle 1 transmitted from the in-vehicle cameras 10F and 10G, the image display device 100 transforms the captured view images to a bird's eye view image as viewed from above the vehicle 1. The image display device 100 displays the obtained bird's eye view image in the display window 11.

A steering angle sensor 12, a speed sensor 13, and a gear position sensor 14, etc. are mounted on the vehicle 1. The steering angle sensor 12 detects a steering angle of a steering angle handle 2. The speed sensor 13 detects a moving speed of the vehicle 1. The gear position sensor 14 detects a gear position of the transmission (not shown). The image display device 100 receives output signals transmitted from the steering angle sensor 12, the speed sensor 13 and the gear position sensor 14.

The image display device 100 acquires movement information (a moving speed, a moving direction) of the vehicle 1. The image display device 100 generates a bird's eye view image having dead angle areas of the in-vehicle cameras 10F, 10R of the vehicle 1, and displays the generated bird's eye view image in the display window 11.

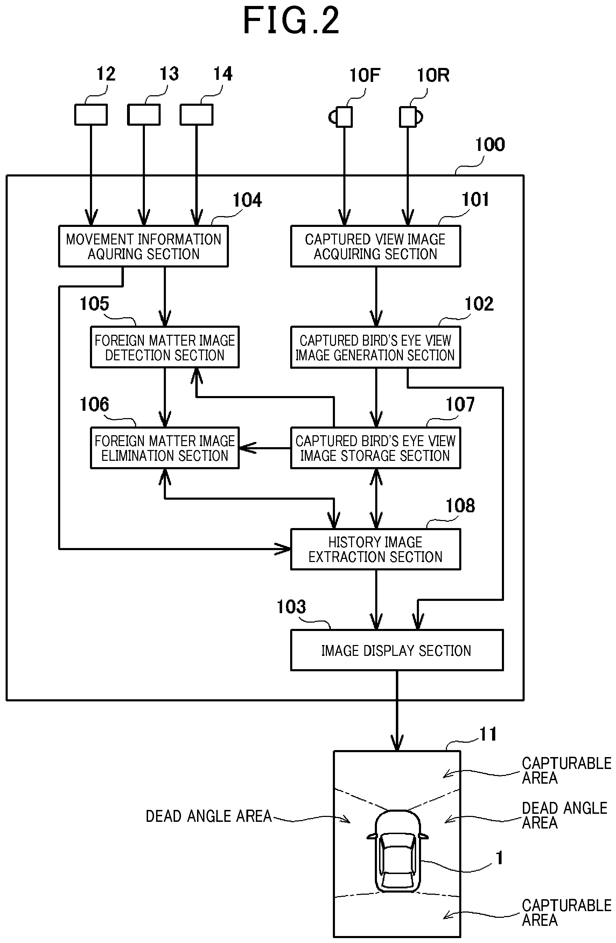

FIG. 2 shows a schematic inner structure of the image display device 100 according to the present exemplary embodiment. As shown in FIG. 2, the image display device 100 according to the present exemplary embodiment has a captured view image acquiring section 101, a bird's eye view image generation section 102, an image display section 103, a movement information acquiring section 104, and a foreign matter image detection section 105, a foreign matter image elimination section 106, a captured bird's eye view image storage section 107, and a history image extraction section 108. Those eighth sections are not physical hardware devices which are different devices respectively, but correspond to functions of the image display device 100. Accordingly, it is possible to realize these eight sections by using computer programs to be executed by a central processing unit CPU, or by using electronic circuits including LSIs and memories, or a combination of them.

The captured view image acquiring section 101 is connected to the in-vehicle cameras 10F and 10R, and acquires captured view images transmitted from those in-vehicle cameras 10F and 10R. The in-vehicle camera 10F captures a forward view image from obliquely above the vehicle 1 at every constant period (approximately 30 Hz). The in-vehicle camera 10R captures a backward view image from obliquely above the vehicle 1 at every constant period (approximately 30 Hz).

The in-vehicle cameras 10F and 10R transmit the captured view images to the bird's eye view image generation section 102. The captured view image acquiring section 101 of the present exemplary embodiment corresponds to the captured view image acquiring section of the present invention.

When receiving the captured view images transmitted from the in-vehicle cameras 10F and 10R, the bird's eye view image generation section 102 generates a bird's eye view image on the basis of the captured view images. That is, the captured view image transmitted from the in-vehicle camera 10F is the forward view image from obliquely above the vehicle 1. The bird's eye view image generation section 102 executes a sight-line transformation of the captured view image so as to generate a bird's eye view image when viewed from above the vehicle 1. Similarly, the captured view image transmitted from the in-vehicle camera 10R is the backward view image from obliquely above the vehicle 1. The bird's eye view image generation section 102 executes the sight-line transformation of the captured view image so as to generate a bird's eye view image when viewed from above the vehicle 1. The method of executing the sight-line transformation of the captured view images transmitted from the in-vehicle cameras 10F and 10R will be described later. The bird's eye view image generation section 102 according to present exemplary embodiment corresponds to the bird's eye view image generation section according to the present invention.

It is possible for the image display device 100 according to the present exemplary embodiment to generate a bird's eye view image of right hand area and left hand area of the vehicle 1 in addition to the forward area and the backward area of the vehicle 1, and to display the generated bird's eye view images in the display window 11.

The bird's eye view image in the forward direction and the bird's eye view image in the backward direction of the vehicle 1 to be displayed in the display window 11 are generated on the basis of the sight-line transformation of the images currently-captured by the in-vehicle cameras 11F and 11R.

On the other hand, the bird's eye view image to be displayed for the right hand side of the vehicle 1 and the bird's eye view image to be displayed for the left hand side of the vehicle 1 are synthesized by using the past captured bird's eye view images, i.e. the past captured bird's eye view image in the forward direction and the past captured bird's eye view image in the backward direction of the vehicle 1 captured at a past time and previously displayed.

In order to distinguish the former bird's eye view images from the latter bird's eye view images, hereinafter, the former images, i.e. the bird's eye view images generated by performing the sight-line transformation of the images currently-captured by the in-vehicle cameras 11F and 11R will be referred to as the captured bird's eye view images.

A bird's eye view image only represents an image when viewed from above the vehicle 1. The bird's eye view image as a generic term has both the captured bird's eye view image, and the synthesized bird's eye view images (as history images which will be explained later) to be displayed for the right hand and the left hand area of the vehicle 1.

The bird's eye view image generation section 102 transmits the captured bird's eye view images to the captured bird's eye view image storage section 107 and the image display section 103.

When receiving the captured bird's eye view images in the forward direction and backward direction of the vehicle 1 transmitted from the bird's eye view image generation section 102, the image display section 103 arranges the received captured bird's eye view images in capturable areas in the display window 11 which are present at the forward section and the backward section of the vehicle 1 so as to display the bird's eye view images around the vehicle 1 in the display window 11.

The image display section 103 according to the present exemplary embodiment corresponds to the captured bird's eye view image display section according to the present invention. The image display section 103 can display the bird's eye view images at the dead angle areas, i.e. in the blind spots at the right hand and left hand side of the vehicle 1 by using the following method which will be explained later.

The captured bird's eye view image storage section 107 stores the captured bird's eye view images transmitted from the bird's eye view image generation section 102. The captured bird's eye view image storage section 107 according to the present exemplary embodiment corresponds to the bird's eye view image storage section according to the present invention. The movement information acquiring section 104 is connected to the steering angle sensor 12, the speed sensor 13, the gear position sensor 14, etc. The movement information acquiring section 104 acquires movement information of the vehicle 1 on the basis of the output signals transmitted from the steering angle sensor 12, the speed sensor 13 and the gear position sensor 14, etc. The movement information of the vehicle 1 represents information regarding whether the vehicle 1 moves forward, backward, or is stopped, and whether the vehicle 1 turns right or left, and information regarding a turning radius of the vehicle 1 and a speed of the vehicle 1, etc.

The movement information acquiring section 104 according to first exemplary embodiment corresponds to the movement information acquiring section according to the present invention.

The history image extraction section 108 extracts partial images (as history images), which correspond to dead angle areas at right hand and left hand side of the vehicle 1, from the captured bird's eye view images stored in the captured bird's eye view images storing section 107 on the basis of the movement information transmitted from the movement information acquiring section 104. That is, because the dead angle areas at a current time correspond to the capturable areas at a past time, the captured bird's eye view images stored in the captured bird's eye view images storage section 107 have the images of the dead angle area at the current time. The history image extraction section 108 specifies the images corresponding to the dead angle areas on the basis of the movement information of the vehicle 1, extracts the specified images as the history images from the captured bird's eye view images. The history image extraction section 108 transmits the extracted history images to the image display section 103.

When receiving the history images at the right hand side area and the left hand side area of the vehicle 1, the image display section 103 arranges the received history images at the right hand side area and the left hand side area of the vehicle 1 in the display window 11 so as to produce the dead angle areas of the vehicle 1. As a result, the image display section 103 displays the bird's eye view image around the vehicle 1 in the display window 11. The image display section 103 according to the present exemplary embodiment corresponds to the history image display section according to the present invention.

The foreign matter image detection section 105 detects presence of a foreign matter image in the image regions of the captured bird's eye view images. Such foreign matter is water drops or mud, which have been adhered on the in-vehicle cameras, in the captured bird's eye view images. Those captured bird's eye view images have been stored in the captured bird's eye view image storage section 107.

If such foreign matter image remains in the captured view images, the generated bird's eye view images also have such foreign matter, and the history images (as the bird's eye view image) to be displayed in the display window 11 also have such foreign matter image. The foreign matter image detection section 105 detects presence of such foreign matter image in the captured view images. It is also acceptable for the foreign matter image detection section 105 to detect the presence of foreign matter image in the images areas of the captured view images obtained by the captured view image acquiring section 101.

The foreign matter image elimination section 106 temporarily receives the history images, before the display thereof, transmitted from the history image extraction section 108, eliminate foreign matter image from the received history images, and outputs, to the history image extraction section 108, the history images from which such foreign matter image has been eliminated. This makes it possible to display the history images (as the bird's eye view images), from which such foreign matter image has been eliminated, in the display window 11, even if the captured view images have such foreign matter image captured by the in-vehicle cameras 11F, 11R.

As previously described, a combination of the foreign matter image detection section 105, the foreign matter image elimination section 106 and the history image extraction section 108 according to the present exemplary embodiment outputs the images as the history images without executing the extraction process when no foreign matter image is present therein. On the other hand, when foreign matter image is present in the images, the combination of the foreign matter image detection section 105, the foreign matter image elimination section 106 and the history image extraction section 108 according to the present exemplary embodiment extracts such foreign matter image from the images, and outputs the history images, from which such foreign matter image has been eliminated.

As previously described, the foreign matter image detection section 105, the foreign matter image elimination section 106 and the history image extraction section 108 according to the present exemplary embodiment correspond to the history image extraction section according to the present invention.

The image display device according to the present exemplary embodiment previously described uses history images so as to display bird's eye view images of dead angle areas around the vehicle 1 in the display window, and thereby has a specific feature having less influence due to foreign matter image in the captured view images (i.e. the history images).

Hereinafter, a description will be given of the reasons of the specific feature and the method of displaying the bird's eye view images around the vehicle 1 by the image display device 100.

First, a description will now be given of the method of generating captured bird's eye view images by the sight-line transformation, and the method of displaying the bird's eye view images on the basis of the history images.

### (B. Principal of displaying bird's eye view images around vehicle on the basis of history images)

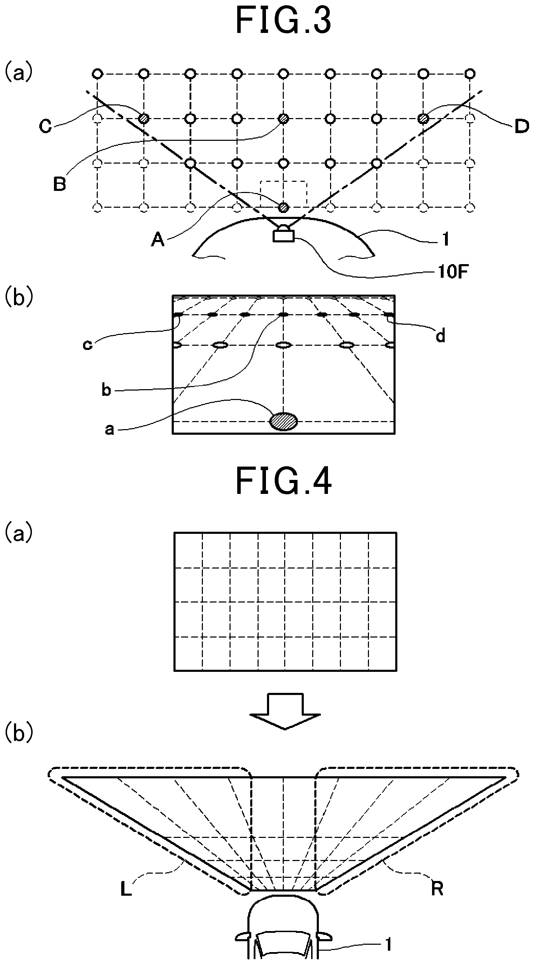

FIG. 3 (a) shows an example of a forward ground view, when viewed from above the vehicle 1, to be captured by the in-vehicle camera 10F (or the in-vehicle camera 10R), on which multiple dots are arranged on the ground view in front of the vehicle at regular intervals in a lattice arrangement.

In the drawing, two long dashed short dashed lines extending in an oblique direction from the in-vehicle camera 10F represent boundaries between the capturable areas and dead angle areas of the in-vehicle camera 10F and the two boundary lines and angle areas of the in-vehicle camera 10F.

In the multiple dots, the dots with solid lines represent to be in the capturable areas of the in-vehicle camera 10F, and on the other hand, the dots with dashed lines represent to be in the dead angle area of the in-vehicle camera 10F. The in-vehicle camera 10F (or the in-vehicle camera 10R) photographs a forward ground from obliquely above of the vehicle 1.

FIG. 3 (b) shows the captured view image transmitted from the in-vehicle camera 10F. The captured view image has a ground marking in the capturable area of the in-vehicle camera 10F. For example, the mark a on the captured view image shown in FIG. 3 (b) corresponds to the mark A on the ground image shown in FIG. 3 (a), and the mark b on the captured view image shown in FIG. 3 (b) corresponds to the mark B on the ground image shown in FIG. 3 (a). Similarly, the marks c and d on the captured view image shown in FIG. 3 (b) correspond to the marks C and D on the ground image shown in FIG. 3 (a). That is, there is a relationship in one to one correspondence between the forward ground view and the captured view image of the in-vehicle camera 10F. Accordingly, on the basis of the relationship previously described, it is possible to transform the captured view image shown in FIG. 3 (b) to an image (as the bird's eye view image) when viewed from above the vehicle 1 shown in FIG. 3 (a). This method indicates the sight-line transformation of generating the bird's eye view image from the captured view image obtained by the in-vehicle camera 10F (or the in-vehicle camera 10R).

The execution of the sight-line transformation previously described transforms the captured view image shown in FIG. 4 (a) to the bird's eye view image shown in FIG. 4 (b). In the obtained bird's eye view image, the further the location of points, the more the points are extended in the right direction and left direction. This means that the capturable range of the in-vehicle camera 10F (or the in-vehicle camera 10R) extends toward both the right hand and the left hand side (see FIG. 3 (a)). FIG. 4 (b) shows the area L which extends toward the left hand side in the bird's eye view image, and the area R which extends toward the right hand in the bird's eye view image.

In the image shown in FIG. 4 (b), both the area L and the area R are located within the capturable area of the in-vehicle camera 10F. However, when the vehicle 1 moves forward, the area L enters the dead angle area at the left hand of the vehicle 1, and the area R enters the deal angle area at the right hand of the vehicle 1. Accordingly, the bird's eye view images (i.e. the captured bird's eye view images), which have been obtained from the captured view images of the in-vehicle camera 10F by the sight-line transformation, are stored in advance. According to the movement of the vehicle 1, it is sufficient to extract the partial images (as the history images), which correspond to a current dead angle areas of the in-vehicle cameras, and to display the partial images.

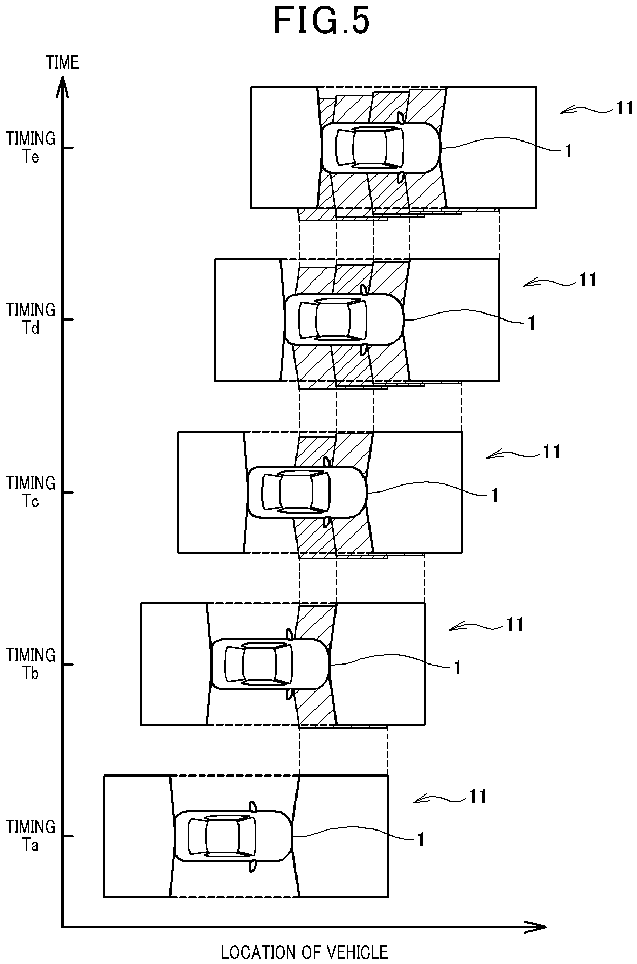

FIG. 5 shows the history images displayed for the dead angle areas due to the movement of the vehicle 1. For example, at timing Ta, the captured bird's eye view images are displayed for the forward area and the backward area of the vehicle 1, but images of the right hand and left hand side of the vehicle 1 are not displayed. Those captured bird's eye view images are used to display the bird's eye view images on the capturable areas, and also used as the bird's eye view images in the dead angle areas later. Accordingly, the captured bird's eye view images are stored in the memory device.

Next, when the in-vehicle cameras 10F, 10R capture new images at timing Tb, new captured bird's eye view images are generated on the basis of the captured view images, and displayed for the forward area and the backward area of the vehicle 1. Further, the captured bird's eye view images, which have been stored at timing Ta in the memory device are displayed, as designated by the slanting lines in FIG. 5.

In FIG. 5, in order to show the captured bird's eye view images obtained at different timings, which are overlapped together, the captured bird's eye view images, which have been previously captured at past timing (i.e. as designated by the slanting lines), are slightly shifted to the right hand of the vehicle 1. As shown in the drawing, a part of the captured bird's eye view images obtained at timing Ta are overlapped with the captured bird's eye view images currently obtained at timing Tb, and there are non-overlapped areas in which those captured bird's eye view images are not overlapped together. The other parts correspond to new dead angle areas of the in-vehicle camera 10F at timing Tb. In this case, partial images, which correspond to the non-overlapped areas, are extracted from the captured bird's eye view images obtained at timing Ta, and the extracted partial images are displayed for the display areas of the display window 11, which correspond to the dead angle areas at the right hand and left hand side of the vehicle 1. Further, the captured bird's eye view images obtained at timing Tb are stored in the memory device, from which the history images will be extracted later.

Because the in-vehicle cameras 10F, 10R capture images at regular intervals of approximately 30 Hz, FIG. 5 shows the movement distance of the vehicle 1 which is longer than an actual movement distance of the vehicle 1 during the period from timing Ta to Timing Tb. Accordingly, a large part of the captured bird's eye view images obtained at timing Ta is overlapped with the captured bird's eye view images obtained at timing Tb. That is, the area of actually-extracted partial images is small when compared with the area of the extracted partial images shown in FIG. 5.

Further, in-vehicle cameras 10F, 10R capture new images at timing Tc, the captured bird's eye view images generated on the basis of these new images are displayed in the display window 11 for the forward area and the backward area of the vehicle 1. As shown in FIG. 5, at timing Tc the captured bird's eye view images, which have been obtained at timing Ta and timing Tb, are stored in the memory device.

The captured bird's eye view images, which have been displayed for the dead angle areas at timing Tb, are shifted in a direction which is opposite from the forward direction of the vehicle 1, due to the movement of the vehicle 1 during the period from timing Tb to timing Tc. For example, as shown in FIG. 5, when the vehicle 1 moves forward, the display position is shifted in the backward direction in the display window 11. Further, the partial images, which correspond to the new dead angle area newly occurred due to the movement of the vehicle 1, are extracted from the captured bird's eye view images, and used as the history images. Because a plurality of the captured bird's eye view images obtained at timing Ta and timing Tb have been stored and each of which has areas corresponding to the dead angle areas, the partial images are extracted from the captured bird's eye view images obtained at timing Tb and used as the history images. The obtained history images are displayed for the areas which correspond to the dead angle areas which are newly occurred due to the movement of the vehicle 1. Further, the captured bird's eye view images obtained at timing Tc are stored in the memory device, from which new partial images will be extracted later.

Similarly, the captured bird's eye view images and the history images are displayed in the display window 11 at timing Td, timing Te, ... and every timing when the in-vehicle cameras 11F, 11R capture new images. That is, the captured bird's eye view images, which have been obtained from the captured view images by the sight-line transformation, are displayed in the capturable areas at forward area and backward area of the vehicle 1 in the display window 11. Further, the history images, which have been displayed at previous timings, are shifted to the dead angle areas, and new history images, which have been extracted from the captured bird's eye view image, are displayed for the area of the display window 11, which corresponds to the new dead angle areas caused by the movement of the vehicle 1. The processes previously described make it possible to display the bird's eye view images around the vehicle 1 in the display window 11.

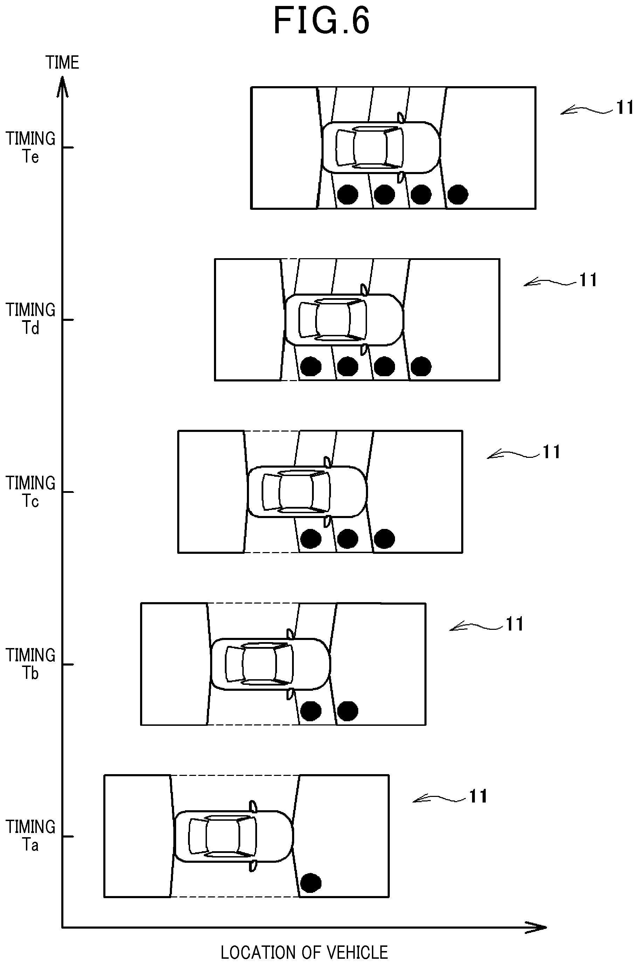

The technique of displaying the bird's eye view images by using the history images previously described has the following drawback. That is, when foreign matter is adhered on the in-vehicle camera 10F (or the in-vehicle camera 10R), and the captured view images have such foreign matter image, the obtained bird's eye view images to be displayed have a deteriorated image quality. The reason of this will be explained with reference to FIG. 6.

For example, in a case in which foreign matter is adhered on the in-vehicle camera 10F (or the in-vehicle camera 10R), and the captured view images of the in-vehicle camera have images of such foreign matter image. The black points in the captured bird's eye view image obtained at timing Ta shown in FIG. 6 represent the images of the foreign matter. In this example, the image of the foreign matter is present in the areas which will be extracted as the history images at timing Tb. Accordingly, the history images extracted from the captured bird's eye view images have such foreign matter at timing Tb, and the history images continue to have such foreign matter at every timing after timing Tb when the history images are shifted and displayed.

When foreign matter is adhered on the in-vehicle camera 10F (or the in-vehicle camera 10R) once, the foreign matter is usually adhered on the in-vehicle camera for a while. In this case, the captured bird's eye view images to be generated later have such foreign matter image. For example, as shown in FIG. 6, the captured bird's eye view images generated during a period of timing Ta to timing Td have the foreign matter image. Accordingly, such foreign matter image is displayed for new history images which will be extracted during the period from timing Tc to timing Te from the captured bird's eye view images. As a result, the images of the foreign matter image is continuously displayed in the display window 11, and the region of the foreign matter image, as designated by the black points shown in FIG. 6, is expanded in the display window 11. In order to avoid this drawback, the image display device 100 according to the present exemplary embodiment displays the bird's eye view image around the vehicle 1 by the following method.

### (C. Bird's eye view image display process according to the first exemplary embodiment)

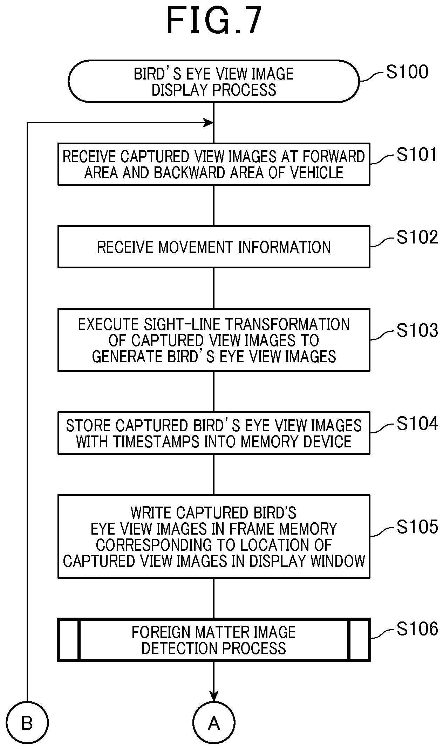

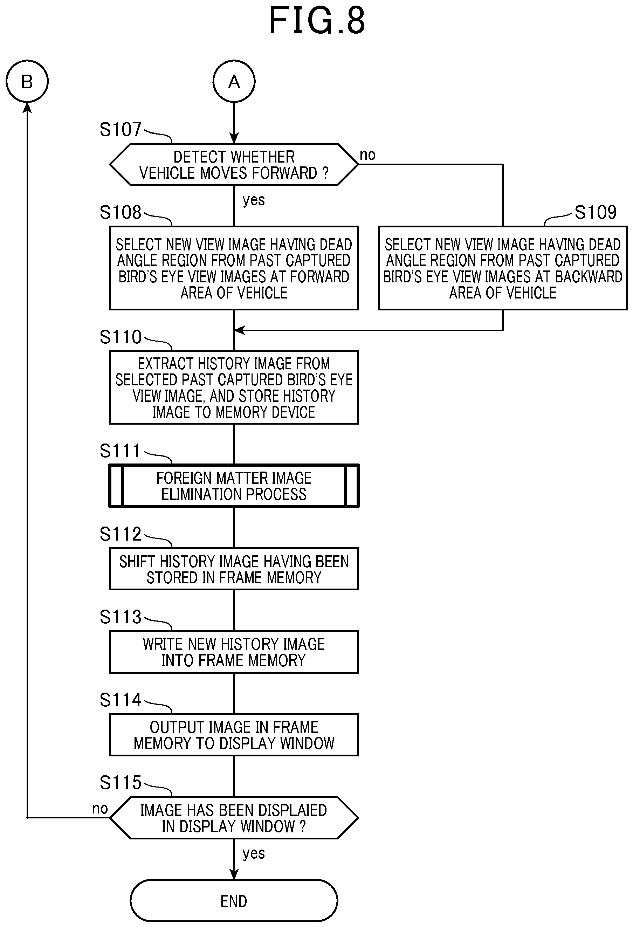

FIG. 7 and FIG. 8 show the flow chart of the bird's eye view image display process executed by the image display device 100 and method according to the first exemplary embodiment.

The image display device 100 executes the bird's eye view image display process. As shown in FIG. 7 and FIG. 8, the image display device 100 according to the first exemplary embodiment starts to execute the bird's eye view image display process, the image display device 100 receives the captured view images transmitted from the in-vehicle camera 10F and the in-vehicle camera 10R. The captured view images represent the images of the forward area and the backward area of the vehicle 1 (step S101).

The image display device 100 receives movement information of the vehicle 1 (step S102), which is transmitted from the steering angle sensor 12, the speed sensor 13, the gear position sensor 14, etc.

Next, the image display device 100 executes the sight-line transformation of the captured view images obtained from the in-vehicle cameras 10F, 10R so as to generate the captured bird's eye view images in the capturable areas which is located at the forward area and the backward area of the vehicle 1 (step S103).

The image display device 100 stores the generated captured bird's eye view image of the forward area and the generated captured bird's eye view image of the backward area of the vehicle 1 into memory areas in a frame memory, which correspond to the location of the capturable areas of the in-vehicle cameras 10F, 10R in the display window 11 (step S104).

The frame memory is used to display the images in the display window 11. The images to be displayed in the display window 11 are temporarily generated and stored in the frame memory, and then transmitted as image signals to the display window 11 so as to display the images in the display window 11. Each address on the frame memory (for example, in a 24 bits address region) corresponds in one-to one correspondence to each pixel in the display window 11. In step S104, the captured bird's eye view image of the forward area of the vehicle 1 is stored to each address in the frame memory, which corresponds to the capturable area of the in-vehicle camera 10F. Similarly, and the captured bird's eye view image of the backward area of the vehicle 1 is stored to each address in the frame memory, which corresponds to the capturable area of the in-vehicle camera 10R.

In the following step, the image display device 100 writes, i.e. stores the captured bird's eye view images into the memory device (step S105). Because the captured bird's eye view images are generated and stored in the memory device every timing when the in-vehicle cameras 10F, 10R capture view images around the vehicle 1, the multiple captured bird's eye view images with time information (for example, with timestamps) which identify the timing when each captured bird's eye view image has been stored in the memory device (or generated) in step S105.

After the captured bird's eye view images have been stored in the memory device (step S105), the image display device 100 executes the foreign matter image detection process (step S106). In the foreign matter image detection process, the image display device 100 detects presence of foreign matter image in the captured bird's eye view images stored in the memory device so as to detect the foreign matter image in the captured view images, i.e. which has been adhered on the in-vehicle camera 10F (or the in-vehicle camera 10R). The foreign matter image detection process will be explained in detail later.

In the following step, the image display device 100 detects whether the vehicle 1 is moving forward (step S107 shown in FIG. 8). The image display device 100 can detect whether the vehicle is moving forward on the basis of the movement information of the vehicle 1 obtained in step S102.

As a result, when the detection result indicates that the vehicle is moving forward ("yes" in step S107), the image display device 100 selects the latest captured bird's eye view image from the captured bird's eye view images which have been previously displayed for the forward area of the vehicle 1 in the display window 11. That is, this latest captured bird's eye view image corresponds to the captured view image of the capturable area which has been captured just before by the in-vehicle camera, and also corresponds to the dead angle area of the vehicle at the current timing.

By the way, the memory device has stored a plurality of the captured bird's eye view images which have the captured view image which corresponds to the dead angle area of the vehicle 1 at the current timing. In general, the image display device 100 uses the latest captured bird's eye view image so as to display the current scene around the vehicle 1.

By the way, in a case in which the vehicle 1 is moving backward ("no" in step S107), the image display device 100 selects the latest captured bird's eye view image (step S109) which corresponds to the backward area of the vehicle 1 and has the dead angle area at the current timing, where the latest captured bird's eye view image has been previously displayed in the display window 11 and has been stored in the memory device.

In the following step, the image display device 100 extracts an image region (as a history image) (step S110), which corresponds to the dead angle area of the in-vehicle camera of the vehicle 1 at the current time, from the captured bird's eye view images selected in step S108 or step S109.

Because the image display device 100 has obtained the movement information of the vehicle 1 in step S102, the image display device 100 can determine the partial areas (as the history images) in the captured bird's eye view image, which correspond to the dead angle area at the current time, on the basis of the obtained movement information of the vehicle 1. The history images, which have been extracted from the captured bird's eye view image, are temporarily stored in the memory device so as to be used by the foreign matter image elimination process.

The image display device 100 executes the foreign matter image elimination process by using the history images so as to eliminate foreign matter image (step S111). That is, when detecting presence of foreign matter image by the foreign matter image elimination process shown in step S106, the image display device 100 executes the foreign matter image elimination process of eliminating the foreign matter image from the history images which have been extracted in step S110. On the other hand, when does not detecting any foreign matter image in step S106, the image display device 100 executes no process of eliminating foreign matter image from the history images. This foreign matter image elimination process (step S111) and the foreign matter image elimination process (step S106) will be explained in detail later.

In the following step, before the past history image (from which the foreign matter image has been eliminated) in the memory device, which correspond to the image region of the dead angle area of the in-vehicle camera at the current time, is written into the frame memory, the image display device 100 shifts the past history images to the areas addressed in the field memory by the movement amount of the vehicle 1 (step S112).

That is, the dead angle area at the current time is moved forward or backward in the past history images according to the amount of movement of the vehicle 1. Accordingly, the past history images, which have been stored in the frame memory, are shifted according to the amount of movement of the vehicle 1.

A part of the history images, which no longer corresponds to the dead angle area of the vehicle 1 due to the movement of the vehicle 1, is eliminated from the frame memory.

Thus, the process of shifting the past history images causes an empty area which corresponds to a part of the addresses of the dead angle area on the frame memory, and in which no past history image is stored. The addresses of the empty area correspond to the addresses of a new dead angle area. The new history image, which has been extracted in step S110, is written into the area designated by the addresses of the new dead angle area on the frame memory (step S113).

Because the captured bird's eye view images in the forward area and the backward area of the vehicle 1 as the capturable areas of the in-vehicle cameras have been stored in the frame memory in step S104 shown in FIG. 8, the overall image to be displayed in the display window 11 is completed by the process of shifting the past history images and by writing the new history images corresponding to the new dead angle areas in the frame memory.

The image display device 100 outputs the images stored in the frame memory to the display window 11 (step S114). The bird's eye view image when viewed from above the vehicle 1 is displayed in the display window 11.

As previously described, after the image on the frame memory is displayed in the display window 11 (step S114), the image display device 100 judges whether it is a time to finish displaying the bird's eye view image around the vehicle 1 in the display window 11 (step S115). When the judgment result indicates that it is necessary to continuously display the bird's eye view image on the display device 100 ("no" in step S115), the operation flow returns to the initial process (step S110 shown in FIG. 7) so as to acquire the captured view images again transmitted from the in-vehicle cameras 10F, 10R, and the image display device 100 executes the series of the processes previously described.

On the other hand, when the judgment result indicates that it is the time to finish displaying the bird's eye view image in the display window 11 ("yes" in step S115), the image display device 100 finishes the execution of the bird's eye view image display process.

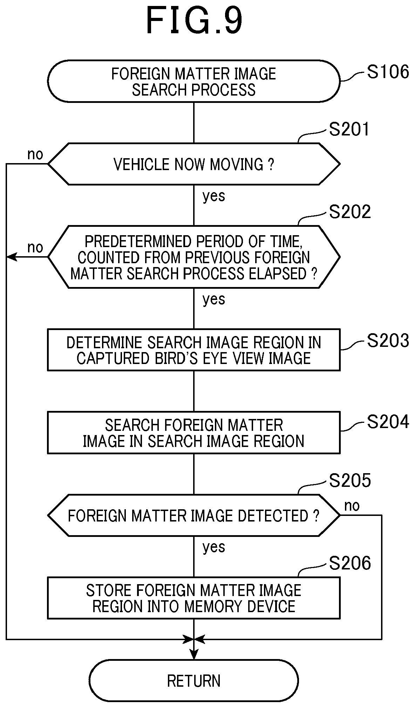

FIG. 9 shows the flow chart of the foreign matter image detection process. As previously described with reference to FIG. 7, the foreign matter image detection process (step S106) is executed after the captured bird's eye view images have been stored in the memory device. The foreign matter image detection process searches the image regions of the captured bird's eye view images which have been stored so as to detect presence of a foreign matter image in the captured view images obtained by the in-vehicle cameras 10F, 10R, where the detected foreign matter image in the captured view images correspond to foreign matter adhered on the in-vehicle cameras 10F, 10R.

On starting the foreign matter image detection process, the image display device 100 detects whether a foreign matter image detection start condition (or the detection start condition) is satisfied. For example, as shown in FIG. 9, the image display device 100 detects whether the vehicle 1 is running (step S201). When the detection result indicates that the vehicle 1 is running ("yes" in step S201, the image display device 100 detects whether a predetermined period of time (for example one minute) counted from the previous execution of the foreign matter image detection process has been elapsed (step S202).

When the predetermined period of time has been elapsed ("yes" in step S202), the image display device 100 starts the following processes so as to detect the presence of foreign matter image because the foreign matter image detection start condition has been satisfied. It is considered for the driver of the vehicle 1 to view the bird's eye view image displayed in the display window 11 when the vehicle 1 is running so as to confirm whether the foreign matter image is present around the vehicle 1.

As previously described, when the image display device 100 has the structure capable of starting the execution of the foreign matter image detection process when the vehicle 1 is running, it is possible for the image display device 100 to reduce the processing load because of executing no foreign matter image detection process when the vehicle 1 is stopped. That is, the driver of the vehicle 1 does not view the bird's eye view image when the vehicle 1 is stopped. The image display device 100 executes the foreign matter image detection process when the vehicle 1 is running. In general, the driver of the vehicle 1 often views the bird's eye view images when the vehicle 1 is running. Accordingly, it is acceptable for the image display device 100 to start the execution of the foreign matter image detection process when the vehicle 1 starts to move, or when the driver of the vehicle 1 depresses the acceleration pedal, or takes off the parking brake, or operates the gear stick to the drive gear position of the transmitter (i.e. when the operation amount of the driver of the vehicle 1 becomes not less than a predetermined amount).

Further, it can be considered that the driver of the vehicle 1 views the bird's eye view image displayed in the display window 11 so as to recognize a distance of the vehicle 1 to an obstacle around the vehicle 1 when the driver of the vehicle 1 has found the presence of the obstacle around the vehicle 1. In this case when the driver of the vehicle 1 finds the obstacle around the vehicle 1, the driver of the vehicle 1 reduces a speed of the vehicle 1. As a result, the vehicle 1 decelerates.

Under a situation in which a current speed of the vehicle 1 is not more than a predetermined speed, or the speed of the vehicle 1 becomes not more the predetermined speed, or a reduction ratio of the speed of the vehicle 1 is not less than a predetermined value, it is acceptable for the image display device 100 to start the execution of the foreign matter image detection process when the driver of the vehicle 1 executes the speed reduction operation (for example, the amount of the driver's operation becomes not less than the predetermined amount). In this case, it is possible for the image display device 100 to reduce the processing load because the image display device 100 does not execute the foreign matter image detection process when there is a low possibility of the driver of the vehicle 1 watching the bird's eye view image displayed in the display window (when the vehicle 1 moves at a high speed, or at a constant speed). The image display device 100 executes the foreign matter image detection process so as to detect presence of foreign matter image in the bird's eye view images (the history images) when there is a high probability of the driver of the vehicle 1 watching the bird's eye view image displayed in the display window (when the vehicle 1 moves at a low speed, or the vehicle 1 decelerates).

In addition, the driver of the vehicle 1 also often views the bird's eye view image displayed in the display window 11 so as to move the vehicle 1 backward and park the vehicle 1. Accordingly, it is acceptable for the image display device 100 to start the foreign matter image detection process when the vehicle 1 moves backward, or when the driver of the vehicle operates the devices to move the vehicle backward (for example, the operation to the acceleration pedal or the operation to the gear stick so as to move the vehicle 1 backward, that is, when the operation amount of the driver of the vehicle 1 becomes not less than the predetermined amount). In the above cases, it is possible for the image display device 100 to reduce the processing load because of not executing the foreign matter image detection process if there is a low probability of the driver of the vehicle 1 watching the bird's eye view image (when the vehicle 1 moves forward), and it is also possible for the image display device 100 to detect presence of foreign matter image in the bird's eye view image (as the history images) if there is a high probability that the driver of the vehicle 1 watches the bird's eye view image (when the vehicle 1 moves backward or starts to move backward).

When the detection result indicates that the foreign matter image detection start condition is satisfied ("yes" in step S201 and step S202 shown in FIG. 9), the image display device 100 executes the process of detecting the foreign matter image in the captured bird's eye view images. The image display device 100 according to the present exemplary embodiment detects presence of the foreign matter image in partial areas to be used (i.e. to be extracted) as the history images, not in the overall captured bird's eye view images. Hereinafter, the history images, which have been extracted from the captured bird's eye view images, will be referred to as the search image regions to be used for detecting presence of the foreign matter image.

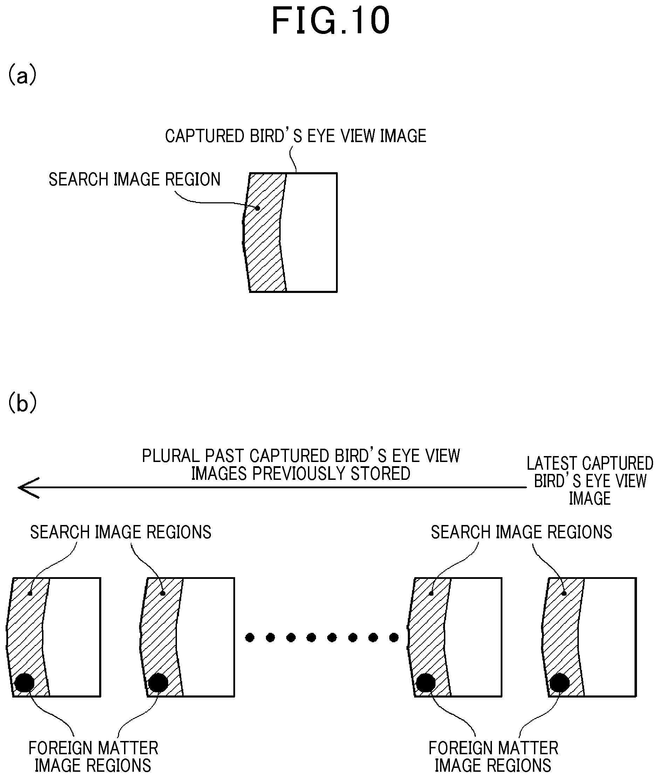

In the foreign matter image detection process, the image display device 100 determines the search image regions. As previously described, the search image regions are extracted from the captured bird's eye view images and used as the history images. Accordingly, similar to the process (step S110 shown in FIG. 8) of extracting the history images from the captured bird's eye view images, the image display device 100 determines the image regions (step S203) which correspond to new dead angle areas caused by the movement of the vehicle 1 on the basis of the movement information obtained in step S102. For example, in the case shown in FIG. 10 (a), because the vehicle 1 is moving forward, the image display device 100 determines the area as the search image regions designated by slanting lines.

After determining the search image regions (step S203), the image display device 100 searches these search image regions so as to detect areas (pixels) having a less change rate of color information during a predetermined period of time (step S204). That is, the surrounding environment of the vehicle 1 changes according to the forward or backward movement of the vehicle 1. When the image display device 100 detects the area having a less change rate of color information (RGB, brightness, etc.), it is possible for the image display device 100 to determine that this area having a less change rate of color information has a foreign matter image (hereinafter, the "foreign matter image region"). The present exemplary embodiment executes this detection process for detecting a foreign matter image in the foreign matter image region.

In the foreign matter image detection process, as shown in FIG. 10 (b), the image display device 100 reads plural captured bird's eye view images during a period from a past timing to a current timing in the captured bird's eye view images stored in the memory device.

The image display device 100 detects whether there is an area having a less change rate of color information in the foreign matter image region between the plural captured bird's eye view images.

Because a change rate of the view around the vehicle 1 becomes small during a short period of time when the speed of the vehicle 1 moves at a low speed, the area with no foreign matter image also has a tendency for the change rate of color information to become small. Accordingly, when the image display device 100 executes the foreign matter image search process during a period when the vehicle 1 moves at a low speed, a possible wrong detection often occurs, in which foreign matter image is detected in the area having no foreign matter image.

On the other hand, because the change rate of the view around the vehicle 1 easily becomes large when the vehicle 1 moves at a high speed, the change rate of color information in the area having no foreign matter image becomes easily large. This means that it is possible for the image display device 100 to have a correct detection when searching the captured bird's eye view images during a short period of time when the vehicle 1 moves at a high speed. Accordingly, when the speed of the vehicle 1 is not less than a predetermined speed (for example, not less than 5 km/h), it is acceptable for the image display device 100 to determine the number of the captured bird's eye view images on the basis of a magnitude of the speed of the vehicle 1. This makes it possible to suppress an incorrect detection of foreign matter image from occurring and to reduce the processing load for detecting the presence of foreign matter image in the detection regions.

Although the image display device 100 determines and uses, as the foreign matter image region, an area having a lower change rate in color information in the captured bird's eye view images, in the example previously described, it is acceptable for the image display device 100 to execute an edge detection process, etc. to detect an object in the captured bird's eye view images, and to determine and use, as the foreign matter image region, an area having the detected object when a movement amount of the detected object is not more than a predetermined amount between the plural captured bird's eye view images.

In addition, the image display device 100 determines and uses the foreign matter image region by searching the captured bird's eye view images, in the example previously described. However, it is acceptable for the image display device 100 to determine, as the search image regions, the area corresponding to the history images of the captured view images obtained by the in-vehicle cameras, and to determine and use the foreign matter image region by searching the search image regions in the captured view images.

After searching the search image region to detect the foreign matter image region (in step S204), when detecting the foreign matter image region (or the foreign matter image) ("yes" in step S205) on the basis of the detection result, the image display device 100 stores the foreign matter image region in the memory device (step S206) and finishes the execution of the foreign matter image detection process shown in FIG. 9. After this, the operation flow returns to the bird's eye view image display device shown in FIG. 7 and FIG. 8.

On the other hand, when not detecting any foreign matter image region ("no" in step S205), the image display device 100 finishes the execution of the foreign matter image detection process shown in FIG. 9. After this, the operation flow returns to the bird's eye view image display device shown in FIG. 7 and FIG. 8.

The foreign matter image region stored in the memory device is eliminated at a timing when the following foreign matter image region is detected.

As previously described in detail, the image display device 100 and method according to the present exemplary embodiment does not detect the presence of foreign matter image in the overall captured bird's eye view images, but detects the presence of a foreign matter image in the image region to be used as the history images, i.e. the search image regions. Accordingly, this makes it possible to eliminate foreign matter image from the history images which are easily influenced by the presence of the foreign matter image, and to reduce the processing load of detecting the foreign matter image.

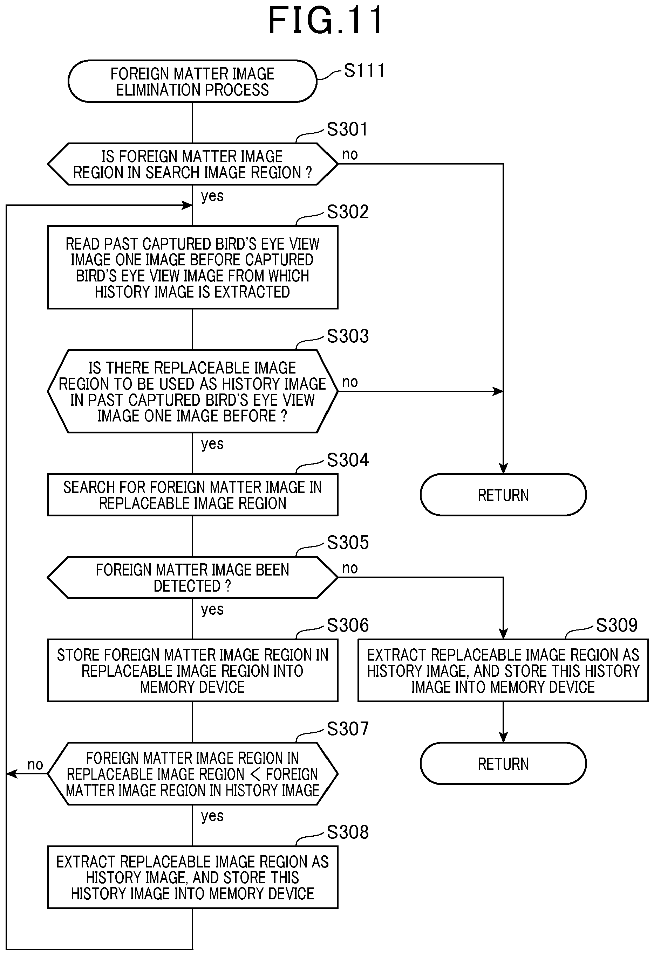

FIG. 11 shows a flowchart of the foreign matter image elimination process in the bird's eye view image display process. As has been previously described with reference to FIG. 8, the foreign matter image elimination process (step S111) is executed after step S110 in which the foreign matter image is eliminated from the history image.

When starting the foreign matter image elimination process, the image display device 100 detects whether the foreign matter image region has been stored (step S301). That is, the image display device 100 detects whether the foreign matter image region has been stored in the memory device after the foreign matter image elimination process shown in FIG. 9 has detected the foreign matter image region (i.e. the presence of the foreign matter image), previously described. When the detection result indicates that no foreign matter image region has been stored in the memory device (i.e. when the foreign matter image has detected, "no" in step S301), the image display device 100 finishes the foreign matter image elimination process shown in FIG. 11 because the history image, which has been extracted in step S110 shown in FIG. 8, has no foreign matter image. The operation flow returns to the bird's eye view image display process shown in FIG. 8. In the bird's eye view image display process shown in FIG. 8, the image display device 100 executes the processes in step S112 to step S114 so as to directly display the history images, which have been extracted in step S110 shown in FIG. 8, in the display window 11.

On the other hand, when the detection result indicates that foreign matter image region has been stored in the memory device (i.e. when the foreign matter image has been detected, "yes" in step S301), the image display device 100 extracts the foreign matter image from the history image, which has been extracted in step S110 shown in FIG. 8.

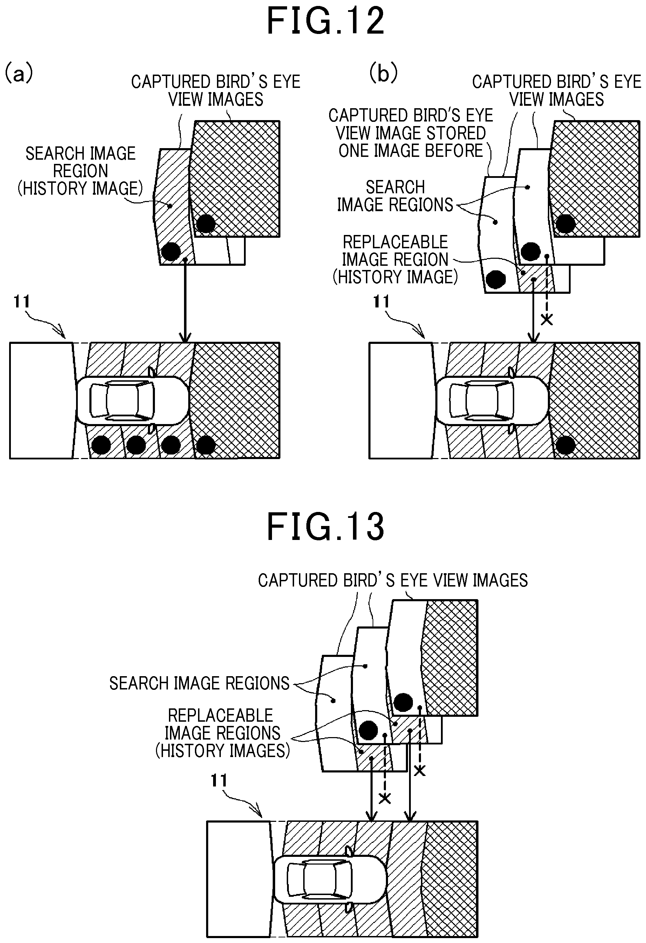

A description will now be given of brief explanation of extracting foreign matter image from history images with reference to FIG. 12 before detailed explanation of the foreign matter image elimination process with reference to the flow chart. In the following explanation, the vehicle 1 is moving forward.

As shown in FIG. 12 (a), the search image region is an image region, as the history image, to be extracted from the past captured bird's eye view image. Accordingly, when a foreign matter image (which is designated by black dots in this drawing) is detected in the search image region, the extracted history image also has the foreign matter image.

When the history images, which are extracted from the past captured bird's eye view images which have the foreign matter image, are displayed directly in the display window 11, the foreign matter image is continuously displayed in the display window 11 during the history images. Because newly extracted history image also has the foreign matter image, a series of the foreign matter image is continuously displayed in the display window 11 as shown in FIG. 12 (a). As a result, the continuously displayed foreign matter image hides an area around the vehicle 1 in the display window 11.

When detecting the foreign matter image region in the search image region (i.e. when the extracted history image has such foreign matter image), the image display device 100 replaces the history image having the foreign matter image with another history image having no foreign matter image so as to eliminate the foreign matter image from the history image.

As shown in FIG. 12 (b), the image display device 100 according to the present exemplary embodiment does not display the history image (which has the foreign matter image) currently extracted from the past captured bird's eye view image (as a first captured bird's eye view image) which has been stored in the memory device, and further reads another past captured bird's eye view image (as a second captured bird's eye view image) instead, which has previously been stored in the memory device one image before the first captured bird's eye view image.

The image display device 100 extracts, as a new history image, the image region (hereinafter, referred to as the "replaceable image region") having the same dead angle area of the history image (which has the foreign matter image) from the second captured bird's eye view image. The image display device 100 displays this new history image as designated by the solid arrow in FIG. 12 (b).

That is, when the vehicle 1 is moving, because the dead angle area in the search image region in the first captured bird's eye view image is also contained in another image region (as the replaceable image region) in another captured bird's eye view image (for example, in the second captured bird's eye view image), the another image region having no foreign matter image is used as the new history image. This makes it possible to eliminate the foreign matter image from the history images. As designated by the crosshatched area shown in FIG. 12 (b), the currently captured bird's eye view image, which corresponds to the capturable areas, is directly displayed in the display window 11.

A description will now be given of the explanation of the foreign matter image elimination process shown in FIG. 11 while considering the explanation previously described.

When the detection result in step S301 indicates that the foreign matter image region is stored in the search image region ("yes" in step S301, i.e. when the foreign matter image is detected in the first captured bird's eye view image), the image display device 100 further reads another captured bird's eye view image as the second captured bird's eye view image which has previously been stored one image before the first captured bird's eye view image, from which the above history image region (having the foreign matter image) is currently extracted (step S302).

The display device 100 judges whether the second captured bird's eye view image has the replaceable image region (step S303).

As has been explained with reference to FIG. 12(b), the replaceable image region in the second captured bird's eye view image is the image region which has the same dead angle area in the currently-extracted history image (which has the foreign matter image).

When the detection result in step S303 indicates that the second captured bird's eye view image, which has been stored one image before the first captured bird's eye view image, does not have any replaceable image region ("no" in step S303), the image display device 100 finishes the foreign matter image elimination process. The operation flow returns to the bird's eye view image display process shown in FIG. 8. In this case, the image display device 100 executes step S112 to S114, after the foreign matter image elimination process, in the bird's eye view image display process shown in FIG. 8 so as to directly display the history images extracted in step S110 in the display window 11.

On the other hand, when the detection result in step S303 indicates that the second captured bird's eye view image, which has been stored one image before the first captured bird's eye view image, has any replaceable image region ("yes" in step S303), the image display device 100 detects whether the replaceable image region has the foreign matter image (step S305).

As has been explained with reference to FIG. 12 (b), there is a possible case in which the replaceable image region has the foreign matter image when the replaceable image region is extracted from the captured bird's eye view image and is used as the history images. In this case, similar to the search process in the search image regions (see FIG. 10), the image display device 100 searches the foreign matter image (i.e. the foreign matter image region) in the replaceable image region.

When the detection result indicates that the replaceable image region does not have any foreign matter image ("no" in step S305), the image display device 100 extracts the replaceable image region from the captured bird's eye view image, and stored as the new history image into the memory device (i.e. the history image without foreign matter image is extracted) (step S309).

After this, the image display device 100 finishes the foreign matter image elimination process shown in FIG. 11, and the operation flow returns to the bird's eye view image display process shown in FIG. 8. In this case, after the foreign matter image elimination process, the image display device 100 executes step S112 to S114 in the bird's eye view image display process shown in FIG. 8 so as to display the new history images as the extracted replaceable image region in the display window 11.

The processes previously described make it possible to correctly display the part, which is hidden by the foreign matter image in the dead angle area of the vehicle 1, in the display window 11, and to improve the display quality of the bird's eye view images around the vehicle 1.

On the other hand, when the detection result indicates that the replaceable image region has the foreign matter image ("yes" in step S305), the image display device 100 stores the foreign matter image region in the replaceable image region into the memory device (step S306). The image display device 100 compares a size (as the number of pixels) of the replaceable image region with the size (as the number of pixels) of the foreign matter image region in the history image (as the search image region) which has already been extracted (step S307).

When the comparison result indicates that the size of the foreign matter image region in the replaceable image region is smaller than the size of the foreign matter image region in the history image ("yes" in step S307), the replaceable image region is extracted and stored as the new history image into the memory device (step S308).

That is, the image display device 100 compares the size of the foreign matter image in the history image which has already been extracted with the size of the foreign matter image in the history image which will be newly extracted. When the size of the foreign matter image in the history image to be newly extracted is smaller than that in the history image which has already been extracted, the image display device 100 newly extracts the former history image. On the other hand, when the size of the foreign matter image in the history image to be newly extracted is larger than that in the history image which has already been extracted, the image display device 100 does not newly extract the replaceable image region (to be newly extracted as the new history image).

After the execution of step S307 and step S308, the image display device 100 repeats the processes after step S302 to read the past captured bird's eye view images one by one which have already been stored in the memory device (step S302), and detects whether each past captured bird's eye view image has the replaceable image region (step S303).

When the detection result indicates that the replaceable image region is contained in the past captured bird's eye view image ("yes" in step S303), the image display device 100 further detects whether the replaceable image region has the foreign matter image.

When the detection result indicates that the replaceable image region has no foreign matter image ("no" in step S305), the image display device 100 extracts this replaceable image region and uses as the new history image (i.e. which has no foreign matter image and is extracted as the new history image). In this case, the image display device 100 executes the processes in step S112 to step S114 after the foreign matter image elimination process in the bird's eye view image display process shown in FIG. 8, and displays the history images with no foreign matter image (from which the foreign matter image has been eliminated) in the display window 11. This makes it possible to detect the image having no foreign matter image in the past captured bird's eye view images, and display the image, which has been hidden by the foreign matter image in the dead angle area of the vehicle 1. Accordingly, it is possible to increase the probability of displaying the hidden part in the dead angle area of the vehicle 1 due to the presence of the foreign matter image, and to improve the image quality of the bird's eye view images around the vehicle 1.

On the other hand, when the replaceable image region has the foreign matter image ("yes" in step S305), the image display device 100 compares the size (to be newly extracted as the new history image) of the foreign matter image region in the replaceable image region in the past captured bird's eye view image with the size of the foreign matter image region in the history image which has been extracted. When the comparison result indicates that the size of the foreign matter image region in the replaceable image region is smaller than the size of the foreign matter image region in the history image ("yes" in step S307), the image display device 100 extracts the replaceable image region as the new history image (step S308). That is, when the replaceable image region in the past captured bird's eye view images has the foreign matter image, the replaceable image region having the smallest foreign matter image is extracted as the new history image. When there is no replaceable image region without the foreign matter image in the overall past captured bird's eye view images ("no" in step S303), the image display device 100 finishes the foreign matter image elimination process shown in FIG. 11. The operation flow returns to the bird's eye view image display process shown in FIG. 8. In this case, the image display device 100 executes step S112 to S114, after the foreign matter image elimination process, in the bird's eye view image display process shown in FIG. 8 so as to directly display the history images extracted in step S110 in the display window 11. That is, this case makes it possible to display the history image having the foreign matter image having the minimum size in the display window 11. Although this cannot completely eliminate the foreign matter image in the dead angle area of the vehicle 1 in the display window 11, it is possible to reduce the size of the foreign matter image in the display window 11, and to improve the quality of the captured bird's eye view images around the vehicle 1.

As shown in FIG. 12 (b), when the foreign matter image is contained in the search image regions, this foreign matter image is also contained in the captured bird's eye view image which is currently captured by the in-vehicle camera (which is designated by the crosshatched area shown in FIG. 12 (b)) to be displayed in the image region in the display window 11 corresponding to the capturable area. As shown in FIG. 13, when the captured bird's eye view image has the foreign matter image, it is acceptable for the image display device 100 to replace the search image region in the captured bird's eye view image to be displayed in the image region in the display window corresponding to the capturable area with the replaceable image region in the past captured bird's eye view image. This makes it possible to correctly display the image, corresponding to the capturable area of the vehicle 1, which is hidden by the presence of the foreign matter image. This process further improves the quality of the captured bird's eye view images around the vehicle 1 displayed in the display window 11.

### (Second exemplary embodiment)

Next, a description will be given of the bird's eye view image display process to be executed by the image display device and method according to the second exemplary embodiment.

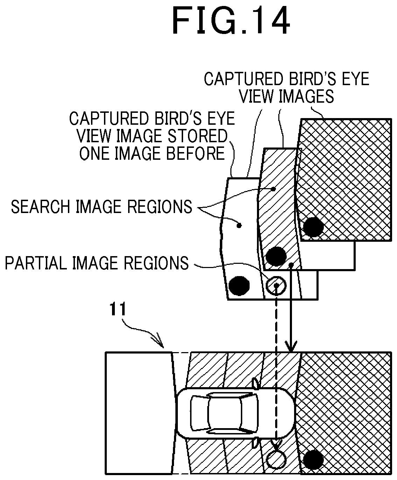

FIG. 14 schematically shows the foreign matter image elimination process to be executed by the second exemplary embodiment. In FIG. 14, the vehicle 1 is moving forward. When the image display device 100 detects the foreign matter image region in the search image region (when the extracted history image has the foreign matter image), the second exemplary embodiment eliminates the foreign matter image by the process which is different from the process of the first exemplary embodiment.

As shown in FIG. 14, the second exemplary embodiment displays an image region having no foreign matter image in the extracted history image (as designated by the solid arrow in FIG. 14). The remaining area having the foreign matter image in the extracted history image is replaced with another image (as designated by the dotted arrow in FIG. 14).

That is, the image display device 100 reads the past captured bird's eye view image (as the second most recently captured bird's eye view image) which has been stored one image before of the most recent previous captured bird's eye view image (as the first most recently captured bird's eye view image) from which the history image has been extracted.

The image display device 100 extracts, from the second most recently captured bird's eye view image, an image region (hereinafter, referred to as the "partial image region" which corresponds to the dead angle image region having the foreign matter image in the extracted history image. The image display device 100 synthesizes the extracted history image and the partial image region together. This makes it possible to eliminate the foreign matter image from the history image to be displayed in the display window 11. As designated by the crosshatched area shown in FIG. 14, the currently captured bird's eye view image, which corresponds to the capturable areas, is directly displayed in the display window 11.

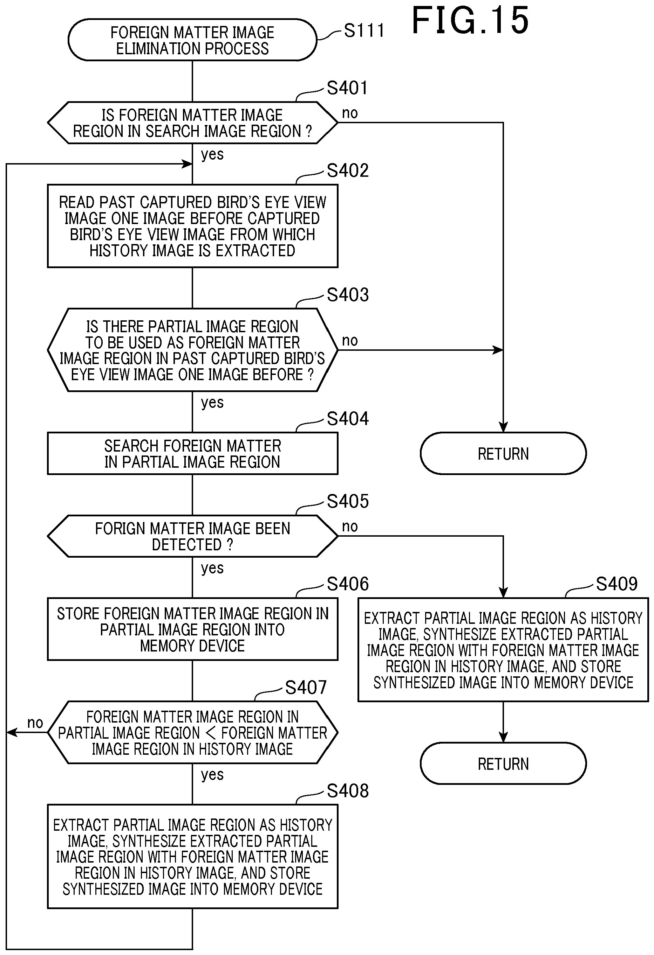

FIG. 15 shows the flow chart of the foreign matter image elimination process in the bird's eye view image display process according to the second exemplary embodiment. The image display device 100 according to the second exemplary embodiment also executes the foreign matter image elimination process after the extraction process of the history image in the bird's eye view image display process shown in FIG. 8.

When starting the foreign matter image elimination process according to the second exemplary embodiment, the image display device 100 detects whether the foreign matter image region has been stored (step S401). That is, the image display device 100 detects whether the foreign matter image region has been stored in the memory device after the foreign matter image elimination process shown in FIG. 9 has detected the foreign matter image region (i.e. the presence of the foreign matter image) has been detected by the foreign matter image elimination process shown in FIG. 9, previously described.

When the detection result indicates that no foreign matter image region has been stored in the memory device (i.e. when no foreign matter has been detected, "no" in step S301), the image display device 100 finishes the foreign matter image elimination process shown in FIG. 15 because the history image, which has been extracted in step S110 shown in FIG. 8, has no foreign matter image. The operation flow returns to the bird's eye view image display process shown in FIG. 8.

In the bird's eye view image display process shown in FIG. 8, the image display device 100 executes the processes in step S112 to step S114 after the foreign matter image elimination process so as to directly display the history image, which has been extracted in step S110 shown in FIG. 8, in the display window 11.

On the other hand, when the detection result indicates that foreign matter image has been stored in the memory device (i.e. when the foreign matter image has been detected, "yes" in step S401), the image display device 100 executes the process of eliminating the foreign matter image from the history image because the history image extracted in step S110 shown in FIG. 8 has the foreign matter image.

In this foreign matter image elimination process, the image display device 100 reads the past captured bird's eye view image (step S402), which has been stored one image before the captured bird's eye view image from which the history image has been extracted. The image display device 100 detects whether the partial image region is present in the past captured bird's eye view image which is currently read from the memory device (step S403). As previously described with reference to FIG. 14, the partial image region indicates the image region having the image of the dead angle area in the second most recently captured bird's eye view image, which corresponds to the foreign matter image region in the currently-extracted history image. In other words, the partial image region corresponds to the dead angle area which is hidden by the foreign matter image in the history image (i.e. the history image has the foreign matter image has currently extracted).

When the detection result indicates that the second most recently captured bird's eye view image does not have the partial image region ("no" in step S403), the image display device 100 finishes the execution of the foreign matter image elimination process shown in FIG. 15. The operation flow returns to the bird's eye view image display process shown in FIG. 8. In the bird's eye view image display process shown in FIG. 8, the image display device 100 executes the processes in step S112 to step S114 after the foreign matter image elimination process so as to directly display the history image (with the foreign matter image), which has been extracted in step S110 shown in FIG. 8, in the display window 11.

On the other hand, when the detection result indicates that the second most recently captured bird's eye view image has the partial image region ("yes" in step S403), the image display device 100 detects whether the partial image region has the foreign matter image (step S405).

As has been described with reference to FIG. 14, the image display device 100 according to the second exemplary embodiment synthesizes the extracted partial image region with the history image. However, there is a possible case in which the partial image region also has foreign matter image therein. Similar to the process of searching the search image region (see FIG. 10), the image display device 100 detects whether the partial image region has the foreign matter image (i.e. the foreign matter image region). As a result, when the partial image region has no foreign matter image ("no" in step S405), the image display device 100 extracts the partial image region from the past captured bird's eye view image. The image display device 100 synthesizes the history image with the extracted partial image region, i.e. writes the extracted partial image region on the foreign matter image region in the history image, and stores the synthesized image into the memory device. After this, the image display device 100 finishes the foreign matter image elimination process shown in FIG. 15. The operation flow returns to the bird's eye view image display process shown in FIG. 8.

In the bird's eye view image display process shown in FIG. 8, the image display device 100 executes the processes in step S112 to step S114 after the foreign matter image elimination process, and displays, in the display window 11, the history image having the synthesized image with the extracted partial image region.

This makes it possible to display the image (of the partial image region), which is hidden by the foreign matter image, in the display window while displaying the image (which is not hidden by the foreign matter image) of the new history image (which has been extracted by the process in step S110 shown in FIG. 8). As a result, the image display device 100 and method according to the second exemplary embodiment improves the quality of the bird's eye view images around the vehicle 1.

When the partial image region also has the foreign matter image region ("yes" in step S405), the foreign matter image region in the partial image region is stored in the memory device (step S406).

The image display device 100 compares a size (as the number of pixels) of the foreign matter image region in the partial image region with a size (as the number of pixels) of the foreign matter image region in the history image (step S407).

When the comparison result indicates that the size of the foreign matter image region in the partial image region is smaller than the size of the foreign matter image region in the history image ("yes" in step S407), the partial image region is extracted. The image display device 100 synthesizes the extracted partial image region with the foreign matter image region in the history image, and stores the synthesized image into the memory device (step S408). That is, the image display device 100 compares the size of the foreign matter image in the history image with the size of the foreign matter image in the partial image region. When the size of the foreign matter image in the partial image region to be newly extracted is smaller than that in the history image, the image display device 100 newly extracts the partial image region, and synthesizes the extracted partial image region and the foreign matter image region in the history image. On the other hand, when the size of the foreign matter image in the partial image region to be newly extracted is greater than that in the history image, the image display device 100 does not extract the partial image region, and does not execute the image synthesis process previously described.

After the execution of step S407 and step S408, the image display device 100 repeats the processes after step S402 to read the past captured bird's eye view images one by one which have already been stored in the memory device (step S402), and detects whether each past captured bird's eye view image has the partial image region (step S403).

When the detection result indicates that the partial image region is contained in the past captured bird's eye view image ("yes" in step S403), the image display device 100 further detects whether the foreign matter image is contained in the partial image region (step S404, step S405).

When the detection result indicates that the partial image region has no foreign matter image ("no" in step S405), the image display device 100 extracts this partial image region and synthesizes the extracted partial image region with the foreign matter image region in the history image (i.e. which has no foreign matter image and is extracted as the new history image). In this case, the image display device 100 executes the processes in step S112 to step S114 after the foreign matter image elimination process in the bird's eye view image display process shown in FIG. 8, and displays the history images with no foreign matter image (from which the foreign matter image has been eliminated) in the display window 11. This makes it possible to detect the image having no foreign matter image in the past captured bird's eye view images, and display the image, which has been hidden by the foreign matter image in the dead angle area of the vehicle 1. Accordingly, it is possible to increase the probability of displaying the hidden part in the dead angle area of the vehicle 1 due to the presence of the foreign matter image, and to improve the image quality of the bird's eye view images around the vehicle 1.

On the other hand, when the detection result indicates that the partial image region has the foreign matter image ("yes" in step S405), the image display device 100 compares the size of the foreign matter image in the partial image region with the size of the foreign matter image in the history image (or as the size of the foreign matter image in the previously-synthesized history image). When the detection result indicates that the size of the foreign matter image in the partial image region (which will be newly extracted) is smaller than that of the foreign matter image in the previously-synthesized history image ("yes" in step S407), the image display device 100 extracts the partial image region and synthesizes the extracted partial image region with the foreign matter image region in the previously-synthesized history image (step S408).

That is, when the replaceable image region has the foreign matter image in the past captured bird's eye view images, the image display device 100 extracts the partial image region having the minimum size of the foreign matter image and synthesizes the extracted partial image region with the history image.

When the image display device 100 does not find partial image regions without foreign matter image in the past captured bird's eye view images stored in the memory device ("no" in step S403), the image display device 100 finishes the execution of the foreign matter image elimination process shown in FIG. 15. The operation flow returns to the bird's eye view image display process shown in FIG. 8. In this case, in the bird's eye view image display process shown in FIG. 8, the image display device 100 executes the processes in step S112 to step S114 after the foreign matter image elimination process, and displays the history image stored in the memory device in the display window 11. That is, the image display device 100 displays the history image with which the partial image region having the foreign matter image having the minimum size has been synthesized. Although this process cannot completely eliminate the foreign matter image from the bird's eye view image, by which the part in the dead angle area of the vehicle is hidden in the display window, it is possible for the image display device 100 to reduce the image size of the foreign matter image displayed in the display window, and to improve the quality of the bird's eye view image around the vehicle in the display window.

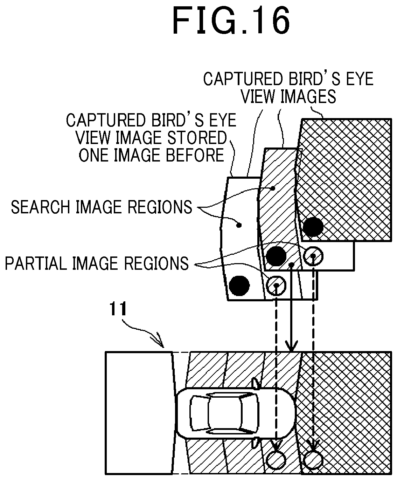

As shown in FIG. 14, when the search image region has the foreign matter image, the foreign matter image is also contained in the captured bird's eye view image to be displayed on the capturable area (which is designated by the crosshatched area shown in FIG. 14) in the image region in the display window 11. As shown in FIG. 16, when the search image region has the foreign matter image, it is acceptable for the image display device 100 to replace the foreign matter image region in the captured bird's eye view image corresponding to the capturable area with the partial image region in the past captured bird's eye view image. This makes it possible to suppress the foreign matter image from being displayed at the area which corresponds to the capturable area of the vehicle 1 in the display window 11. That is, this makes it possible to display the area, which is hidden by the foreign matter image, in the capturable area of the vehicle 1 in the display window 11, and to improve the quality of the bird's eye view image to be displayed in the display window 11.

In addition, in the foreign matter image elimination process in the bird's eye view image display process according to the second exemplary embodiment, as previously described, the image of the foreign matter image is eliminated from the bird's eye view image displayed in the display window 11 by synthesizing the foreign matter image region in the history image and the partial image region in the past captured bird's eye view image. However, the concept of the present invention is not limited by this. It is acceptable to replace the image of the foreign matter image region (having color information) with a predetermined image (having color information) of the foreign matter image region in the history image, or with the image (having color information) which is similar to the surrounding area of the foreign matter image region. This also reduces the processing load of eliminating the foreign matter image from the bird's eye view image displayed in the display window, and to suppress the foreign matter image from being highlighted in the bird's eye view image displayed in the display window 11.

The concept of the present invention is not limited by the image display device 100 and method according to the first exemplary embodiment and the second exemplary embodiment previously described. It is possible to have various modifications within the scope of the present invention.

### [Reference Signs List]

1 Vehicle, 2 Steering angle handle, 10F, 10R In-vehicle cameras, 11 Display window, 12 Steering angle sensor, !3 Speed sensor, 14 Gear position sensor, 100 Image display device, 101 Captured view image acquiring section, 102 Bird's eye view image generation section, 103 Image display section, 104 Movement information acquiring section, 105 Foreign matter image detection section, 106 Foreign matter image elimination section, 107 Captured bird's eye view image storage section, and 108 History image extraction section.

## Claims

1. An image display device (100) for displaying a view image of around a vehicle (1), captured by using in-vehicle cameras (10F, 10R), in a display window (11), comprising:
a captured view image acquiring section (101) receiving captured view images around the vehicle sequentially captured by and transmitted from the in-vehicle cameras;
a bird's eye view image generation section (102) executing a sight-line transformation of the captured view images around the vehicle so as to generate bird's eye view images, as captured bird's eye view images having a sight-line viewed from above the vehicle;
an image display section (103) displaying the captured bird's eye view images at a corresponding location around the vehicle in the display window;
a movement information acquiring section (104) acquiring movement information which represents a movement amount of the vehicle; and
a history image extraction section (108) extracting, as a history image, a partial image from the captured bird's eye view image which has been generated at a timing before the vehicle reached a current location on the basis of the movement information of the vehicle, the history image corresponding to a dead angle area of the in-vehicle camera, wherein
the image display section (103) displays, in the display window, captured bird's eye view images and the history image which corresponds to the dead angle area of the in-vehicle camera, and
the history image extraction section (105, 106, 108) detects whether the extracted history image has an foreign matter image affected by the presence of foreign matter adhered on the in-vehicle camera, and when the detection result indicates that the history image has the foreign matter image, the history image extraction section extracts, as the history image, a partial image without the foreign matter image from another captured bird's eye view image,
**characterized in that**
when detecting the presence of the foreign matter image in the history image extracted from the captured bird's eye view images, the history image extraction section (105, 106, 108) further extracts a partial image, which corresponds to the location of the foreign matter image, from another captured bird's eye view images which has been captured before the captured bird's eye view image, and provides, as the history image, the extracted partial image without the foreign matter image.

2. The image display device for displaying the image of around the vehicle according to claim 1, wherein the history image extraction section detects whether the vehicle is moving on the basis of the movement information of the vehicle, and detects the presence of the foreign matter image on the basis of a detection of no change region in a plurality of the captured bird's eye view images generated during the movement of the vehicle when the detection result indicates that the vehicle is moving.

3. The image display device for displaying the image of around the vehicle according to claim 2, wherein the history image extraction section detects a moving speed of the vehicle on the basis of the movement information of the vehicle, and detects the foreign matter image on the basis of the plurality of the captured bird's eye view images which have been generated during a period of time which corresponds to the moving speed of the vehicle.

4. The image display device for displaying the image of around the vehicle according to any one of claims 1 to 3, wherein when detecting the presence of the foreign matter image, the history image extraction section extracts the history image without the foreign matter image, from which the foreign matter image has been eliminated on the basis of information of images around the foreign matter image in the captured bird's eye view image.

5. A method of displaying an image around a vehicle, captured by using in-vehicle cameras, in a display window, comprising steps of:
receiving (S101) captured view images around the vehicle sequentially captured by and transmitted from the in-vehicle cameras;
executing (S103) a sight-line transformation of the captured view images around the vehicle so as to generate bird's eye view images, as captured bird's eye view images having a sight-line viewed from above the vehicle;
displaying (S114), in the display window, the captured bird's eye view images corresponding to locations around the vehicle;
acquiring (S102) movement information which represents a movement amount of the vehicle; and
extracting (S110), as a history image, a partial image, on the basis of the movement information of the vehicle, from the captured bird's eye view image which has been generated at a timing before the vehicle reached a current location, and the history image corresponding to a dead angle area of the in-vehicle camera, wherein
the history image is displayed (S114) at a location corresponding to the dead angle area of the in-vehicle camera in the display window, and
if it is detected whether the extracted history image has the foreign matter image affected by the presence of foreign matter adhered on the in-vehicle camera, and when the detection result indicates that the history image has the foreign matter image, a partial image without the foreign matter image is extracted (S106, S110, S111) as the history image from another captured bird's eye view image, **characterized in that**
when detecting the presence of the foreign matter image in the history image extracted from the captured bird's eye view images, further extracting a partial image, which corresponds to the location of the foreign matter image, from another captured bird's eye view images which has been captured before the captured bird's eye view image, and providing, as the history image, the extracted partial image without the foreign matter image.

## Patentansprüche

1. Bildanzeigevorrichtung (100) zum Anzeigen eines Sichtbilds um ein Fahrzeug (1), das mit Hilfe von Fahrzeugkameras (10F, 20R) aufgenommen wird, in einem Anzeigefenster (11), die aufweist:
einen Erfassungsabschnitt (101) für aufgenommene Sichtbilder, der aufgenommene Sichtbilder um das Fahrzeug empfängt, die durch die Fahrzeugkameras nacheinander aufgenommen und von ihnen gesendet werden;
einen Erzeugungsabschnitt (102) für Vogelschau-Sichtbilder, der eine Sichtlinientransformation der aufgenommenen Sichtbilder um das Fahrzeug durchführt, um Vogelschau-Sichtbilder als aufgenommene Vogelschau-Sichtbilder zu erzeugen, die eine Sichtlinie mit Blick von oben auf das Fahrzeug haben;
einen Bildanzeigeabschnitt (103), der die aufgenommenen Vogelschau-Sichtbilder an einem entsprechenden Standort um das Fahrzeug im Anzeigefenster anzeigt;
einen Bewegungsinformations-Erfassungsabschnitt (104), der Bewegungsinformationen erfasst, die einen Bewegungsbetrag des Fahrzeugs darstellen; und
einen Verlaufsbild-Extraktionsabschnitt (108), der als Verlaufsbild ein Teilbild aus dem aufgenommenen Vogelschau-Sichtbild, das zu einer Zeit erzeugt wurde, bevor das Fahrzeug einen aktuellen Standort erreichte, auf der Grundlage der Bewegungsinformationen des Fahrzeugs extrahiert, wobei das Verlaufsbild einem Totwinkelbereich der Fahrzeugkamera entspricht, wobei
der Bildanzeigeabschnitt (103) im Anzeigefenster aufgenommene Vogelschau-Sichtbilder und das Verlaufsbild anzeigt, das dem Totwinkelbereich der Fahrzeugkamera entspricht, und
der Verlaufsbild-Extraktionsabschnitt (105, 106, 108) detektiert, ob das extrahierte Verlaufsbild ein Fremdstoffbild hat, das durch das Vorhandensein von Fremdstoffen zustande kommt, die auf der Fahrzeugkamera haften, und wenn das Detektionsergebnis darauf verweist, dass das Verlaufsbild das Fremdstoffbild hat, der Verlaufsbild-Extraktionsabschnitt als Verlaufsbild ein Teilbild ohne das Fremdstoffbild aus einem weiteren aufgenommenen Vogelschau-Sichtbild extrahiert,
**dadurch gekennzeichnet, dass**
bei Detektion des Vorhandenseins des Fremdstoffbilds im Verlaufsbild, das aus den aufgenommenen Vogelschau-Sichtbildern extrahiert wird, der Verlaufsbild-Extraktionsabschnitt (105, 106, 108) ferner ein Teilbild, das der Lage des Fremdstoffbilds entspricht, aus einem weiteren aufgenommenen Vogelschau-Sichtbild extrahiert, das vor dem aufgenommenen Vogelschau-Sichtbild aufgenommen wurde, und als Verlaufsbild das extrahierte Teilbild ohne das Fremdstoffbild bereitstellt.

2. Bildanzeigevorrichtung zum Anzeigen des Bilds um das Fahrzeug nach Anspruch 1, wobei der Verlaufsbild-Extraktionsabschnitt auf der Grundlage der Bewegungsinformationen des Fahrzeugs detektiert, ob sich das Fahrzeug bewegt, und das Vorhandensein des Fremdstoffbilds auf der Grundlage einer Detektion einer änderungsfreien Region in mehreren aufgenommenen Vogelschau-Sichtbildern detektiert, die während der Bewegung des Fahrzeugs erzeugt wurden, wenn das Detektionsergebnis darauf verweist, dass sich das Fahrzeug bewegt.

3. Bildanzeigevorrichtung zum Anzeigen des Bilds um das Fahrzeug nach Anspruch 2, wobei der Verlaufsbild-Extraktionsabschnitt eine Bewegungsgeschwindigkeit des Fahrzeugs auf der Grundlage der Bewegungsinformationen des Fahrzeugs detektiert und das Fremdstoffbild auf der Grundlage der mehreren aufgenommenen Vogelschau-Sichtbilder detektiert, die während einer Zeitspanne erzeugt wurden, die der Bewegungsgeschwindigkeit des Fahrzeugs entspricht.

4. Bildanzeigevorrichtung zum Anzeigen des Bilds um das Fahrzeug nach einem der Ansprüche 1 bis 3, wobei bei Detektion des Vorhandenseins des Fremdstoffbilds der Verlaufsbild-Extraktionsabschnitt das Verlaufsbild ohne das Fremdstoffbild extrahiert, aus dem das Fremdstoffbild auf der Grundlage von Informationen von Bildern um das Fremdstoffbild im aufgenommenen Vogelschau-Sichtbild eliminiert wurde.

5. Verfahren zum Anzeigen eines Bilds um ein Fahrzeug, das mit Hilfe von Fahrzeugkameras aufgenommen wird, in einem Anzeigefenster, das die Schritte aufweist:
Empfangen (S101) aufgenommener Sichtbilder um das Fahrzeug, die durch die Fahrzeugkameras nacheinander aufgenommen und von ihnen gesendet werden;
Durchführen (S103) einer Sichtlinientransformation der aufgenommenen Sichtbilder um das Fahrzeug, um Vogelschau-Sichtbilder als aufgenommene Vogelschau-Sichtbilder zu erzeugen, die eine Sichtlinie mit Blick von oben auf das Fahrzeug haben;
im Anzeigefenster erfolgendes Anzeigen (S114) der aufgenommenen Vogelschau-Sichtbilder, die Standorten um das Fahrzeug entsprechen;
Erfassen (S102) von Bewegungsinformationen, die einen Bewegungsbetrag des Fahrzeugs darstellen; und
als Verlaufsbild erfolgendes Extrahieren (S110) eines Teilbilds auf der Grundlage der Bewegungsinformationen des Fahrzeugs aus dem aufgenommenen Vogelschau-Sichtbild, das zu einer Zeit erzeugt wurde, bevor das Fahrzeug einen aktuellen Standort erreichte, und wobei das Verlaufsbild, das einem Totwinkelbereich der Fahrzeugkamera entspricht, wobei
das Verlaufsbild an einer Stelle, die dem Totwinkelbereich der Fahrzeugkamera entspricht, im Anzeigefenster angezeigt wird (S114) und,
sofern detektiert wird, ob das extrahierte Verlaufsbild das Fremdstoffbild hat, das durch das Vorhandensein von Fremdstoffen zustande kommt, die auf der Fahrzeugkamera haften, und wenn das Detektionsergebnis darauf verweist, dass das Verlaufsbild das Fremdstoffbild hat, ein Teilbild ohne das Fremdstoffbild als Verlaufsbild aus einem weiteren aufgenommenen Vogelschau-Sichtbild extrahiert wird (S106, S110, S111), **dadurch gekennzeichnet, dass**
bei Detektion des Vorhandenseins des Fremdstoffbilds im Verlaufsbild, das aus den aufgenommenen Vogelschau-Sichtbildern extrahiert wird, weiteres Extrahieren eines Teilbilds, das der Lage des Fremdstoffbilds entspricht, aus einem weiteren aufgenommenen Vogelschau-Sichtbild das vor dem aufgenommenen Vogelschau-Sichtbild aufgenommen wurde, und als Verlaufsbild erfolgendes Bereitstellen des extrahierten Teilbilds ohne das Fremdstoffbild.

## Revendications

1. Dispositif d'affichage d'image (100) pour afficher une image de vue d'une périphérie de véhicule (1), capturée à l'aide de caméras embarquées (10F, 10R), dans une fenêtre d'affichage (11), comprenant :
une section d'acquisition d'image de vue capturée (101) recevant des images de vue capturées autour du véhicule, capturées séquentiellement et transmises par les caméras embarquées ;
une section de génération d'image de vue à vol d'oiseau (102) exécutant une transformation de ligne visuelle des images de vue capturées autour du véhicule de sorte à générer des images de vue à vol d'oiseau, telles que des images de vue à vol d'oiseau capturées ayant une ligne visuelle vue depuis le dessus du véhicule ;
une section d'affichage d'image (103) affichant les images de vue à vol d'oiseau capturées à un emplacement correspondant autour du véhicule dans la fenêtre d'affichage ;
une section d'acquisition d'informations de déplacement (104) acquérant des informations de déplacement qui représentent une quantité de déplacement du véhicule ; et
une section d'extraction d'image d'historique (108) extrayant, en tant qu'image d'historique, une image partielle de l'image de vue à vol d'oiseau capturée qui a été générée à un instant avant que le véhicule ait atteint un emplacement actuel sur la base des informations de déplacement du véhicule, l'image d'historique correspondant à une zone d'angle mort de la caméra embarquée, dans lequel
la section d'affichage d'image (103) affiche, dans la fenêtre d'affichage, des images de vue à vol d'oiseau capturées et l'image d'historique qui correspond à la zone d'angle mort de la caméra embarquée, et
la section d'extraction d'image d'historique (105, 106, 108) détecte si l'image d'historique extraite a une image de matière étrangère affectée par la présence d'une matière étrangère adhérant sur la caméra embarquée, et lorsque le résultat de détection indique que l'image d'historique a l'image de matière étrangère, la section d'extraction d'image d'historique extrait, en tant qu'image d'historique, une image partielle sans l'image de matière étrangère à partir d'une autre image de vue à vol d'oiseau capturée,
**caractérisé en ce que**
lors de la détection de la présence de l'image de matière étrangère dans l'image d'historique extraite des images de vue à vol d'oiseau capturées, la section d'extraction d'image d'historique (105, 106, 108) extrait en outre une image partielle, qui correspond à l'emplacement de l'image de matière étrangère, à partir d'une autre image de vue à vol d'oiseau capturée qui a été capturée avant l'image de vue à vol d'oiseau capturée, et fournit, en tant qu'image d'historique, l'image partielle extraite sans l'image de matière étrangère.

2. Dispositif d'affichage d'image pour afficher l'image de la périphérie de véhicule selon la revendication 1, dans lequel la section d'extraction d'image d'historique détecte si le véhicule se déplace sur la base des informations de déplacement du véhicule et détecte la présence de l'image de matière étrangère sur la base d'une détection d'une région sans changement dans une pluralité des images de vue à vol d'oiseau capturées générées durant le déplacement du véhicule lorsque le résultat de détection indique que le véhicule se déplace.

3. Dispositif d'affichage d'image pour afficher l'image de la périphérie du véhicule selon la revendication 2, dans lequel la section d'extraction d'image d'historique détecte une vitesse de déplacement du véhicule sur la base des informations de déplacement du véhicule, et détecte l'image de matière étrangère sur la base de la pluralité des images de vue à vol d'oiseau capturées qui ont été générées durant une période de temps qui correspond à la vitesse de déplacement du véhicule.

4. Dispositif d'affichage d'image pour afficher l'image de la périphérie du véhicule selon l'une quelconque des revendications 1 à 3, dans lequel, lors de la détection de la présence de l'image de matière étrangère, la section d'extraction d'image d'historique extrait l'image d'historique sans l'image de matière étrangère, à partir de laquelle l'image de matière étrangère a été éliminée sur la base d'informations d'images autour de l'image de matière étrangère dans l'image de vue à vol d'oiseau capturée.

5. Procédé d'affichage d'une image de périphérie de véhicule, capturée à l'aide de caméras embarquées, dans une fenêtre d'affichage, comprenant les étapes de :
réception (S101) d'images de vue capturées autour du véhicule, capturées séquentiellement et transmises par les caméras embarquées ;
exécution (S103) d'une transformation de ligne visuelle des images de vue capturées autour du véhicule de sorte à générer des images de vue à vol d'oiseau, en tant qu'images de vue à vol d'oiseau capturées ayant une ligne visuelle vue depuis le dessus du véhicule ;
affichage (S114), dans la fenêtre d'affichage, des images de vue à vol d'oiseau capturées correspondant à des emplacements autour du véhicule ;
acquisition (S102) d'informations de déplacement qui représentent une quantité de déplacement du véhicule ; et
extraction (S110), en tant qu'image d'historique, d'une image partielle, sur la base des informations de déplacement du véhicule, à partir de l'image de vue à vol d'oiseau capturée qui a été générée à un temps avant que le véhicule ait atteint un emplacement actuel, et l'image d'historique correspondant à une zone d'angle mort de la caméra embarquée, dans lequel
l'image d'historique est affichée (S114) à un emplacement correspondant à la zone d'angle mort de la caméra embarquée dans la fenêtre d'affichage, et
s'il est détecté si l'image d'historique extraite a l'image de matière étrangère affectée par la présence d'une matière étrangère adhérant sur la caméra embarquée, et lorsque le résultat de détection indique que l'image d'historique a l'image de matière étrangère, une image partielle sans l'image de matière étrangère est extraite (S106, S110, S111) en tant qu'image d'historique à partir d'une autre image de vue à vol d'oiseau capturée, **caractérisé par**
lors de la détection de la présence de l'image de matière étrangère dans l'image d'historique extraite des images de vue à vol d'oiseau capturées, l'extraction en outre d'une image partielle, qui correspond à l'emplacement de l'image de matière étrangère, depuis une autre image de vue à vol d'oiseau capturée qui a été capturée avant l'image de vue à vol d'oiseau capturée, et la fourniture, en tant qu'image d'historique, de l'image partielle extraite sans l'image de matière étrangère.
